# EUROPÄISCHE PATENTSCHRIFT

(11) **EP 3 722 216 B1**
(45) Veröffentlichungstag und Bekanntmachung des Hinweises auf die Patenterteilung: **03.11.2021**
(21) Anmeldenummer: 19167848.1
(22) Anmeldetag: 08.04.2019
(51) Int. Cl.: B65B 69/00, B65G 69/18

(54) **VERFAHREN UND VORRICHTUNG ZUR BEFÜLLUNG UND/ODER ENTLEERUNG VON FLEXIBLEN BEHÄLTERN**
METHOD AND DEVICE FOR FILLING AND/OR EMPTYING OF FLEXIBLE CONTAINERS
PROCÉDÉ ET DISPOSITIF DE REMPLISSAGE ET / OU DE VIDANGE DE RÉCIPIENTS SOUPLES

(43) Veröffentlichungstag der Anmeldung: 14.10.2020
(73) Patentinhaber: Fydec Holding SA, 1024 Ecublens (CH)
(72) Erfinder: DIETRICH (jun.), Frédéric, 1054 Morrens (CH)
(74) Vertreter: Patent- und Rechtsanwälte Behrmann Wagner PartG mbB

(56) Entgegenhaltungen:
- EP-A1- 0 835 829
- WO-A1-2010/134102
- CH-A1- 708 545
- US-A1- 2008 145 198

## Beschreibung

Die vorliegende Erfindung betrifft ein Verfahren zur Befüllung und/oder Entleerung von flexiblen Behältern, insbesondere Säcken, mit, insbesondere gefährlichen, losen Stoffen, bevorzugt in Pulverform. Zudem betrifft die vorliegende Erfindung eine Befüllungs- und/oder Entleerungsvorrichtung zum Befüllen und/oder Entleeren von flexiblen Behältern, insbesondere Säcken, mit, insbesondere gefährlichen, losen Stoffen, bevorzugt in Pulverform.

Die Befüllung sowie die Entleerung von flexiblen Behältern, beispielsweise Säcken, Big-Bags oder anderen flexiblen Behältern mit oder von losen Stoffen, insbesondere gefährlichen losen Stoffen, ist in verschiedenen Bereichen der industriellen Handhabung von Materialien und Stoffen unumgänglich. Dabei sind die Umladevorgänge in Form der Entleerung oder Befüllung in der Regel notwendig, um einen Bearbeitungs- oder Behandlungsprozess abzuschließen und insofern ein Verfahrensprodukt für die Weiterverwendung, insbesondere für den Transport, zu verpacken und zu portionieren. Gleichermaßen sind die entsprechenden Umladevorgänge, beispielsweise im Fall einer Entleerung flexibler Behälter, in der Regel dann notwendig, um die in den Behältern bevorrateten oder eingeschlossenen Stoffe einem Produktionsverfahren oder einem sonstigen Behandlungsprozess zuzuführen.

Bei den losen Stoffen kann es sich beispielsweise um gesundheitsgefährdende und/oder toxische Stoffe handeln. Gleichermaßen können die losen Stoffe aber auch insofern gefährlich sein, dass sie bei einer entsprechenden Konzentration in der Umgebungsluft ein explosionsfähiges Gemisch bilden können. Die Industrien, die mit derartigen Stoffen und Materialien umgehen oder diese Stoffe und Materialien handhaben, haben aus Arbeitsschutz- und Sicherheitsgründen individuelle oder vereinheitlichte Vorgaben erarbeitet, welches Maß an Stoff oder Material im Rahmen der Befüllung eines Behälters oder aber auch im Rahmen einer Entleerung eines Behälters freigesetzt werden darf, insbesondere also in die Umgebungsluft gelangen darf. Dabei werden in der Regel Grenzwerte festgelegt, die von der jeweiligen Toxizität oder Gefährlichkeit des Stoffes abhängen. Hier wird in der Regel von sogenannten OELs (Occupational Exposure Limits) oder OEBs (Operational Exposure Bands) gesprochen. Diese Grenzwerte setzen fest, wie viel Mikrogramm des entsprechenden Stoffs pro Kubikmeter Raumluft in einer Umgebung einer Befüllungsvorrichtung oder einer Entleerungsvorrichtung gemessen oder detektiert werden dürfen. Für Materialien oder Stoffe, die einem OEB der Klasse 4 zugeordnet werden, sind beispielsweise 1 bis 10 µg pro Kubikmeter Raumluft des entsprechenden Stoffs als Grenzwert festgesetzt. Entsprechend gilt für einen Stoff mit einer OEB-Klasse 5, dass nur noch 0,1 bis 1 µg Stoff pro Kubikmeter Raumluft aufgefunden werden darf.

Die grundsätzliche Natur der gehandhabten Stoffe sowie die Anforderungen an den Arbeitsschutz und an die Produktionssicherheit machen es deshalb erforderlich, dass die Befüllung und auch die Entleerung von flexiblen Behältern mit derartigen Stoffen so ausgestaltet werden, dass die geforderte Eindämmung (Containment) erreicht und die geforderten Grenzwerte nicht überschritten werden. Es muss also sowohl bei dem Befüllen als auch bei dem Entleeren der Behälter zwar einerseits gewährleistet werden, dass die losen Stoffe in die Behälter befüllt oder aus den Behältern entnommen werden, gleichzeitig muss jedoch auch sichergestellt werden, dass die Menge oder das Maß an freigesetztem Material oder freigesetztem Stoff die geforderten Grenzwerte nicht überschreitet.

Aus dem Stand der Technik sind dazu bereits verschiedene Ansätze bekannt. Beispielsweise offenbart die Patentanmeldung DE 10 2017 212 510 A1 eine Anschlussvorrichtung zum Anschließen einer schlauchförmigen Folie an eine Einrichtung, die jedoch eine verhältnismäßig komplexe Mechanik aufweist. Auch aus der Patentanmeldung CH 708 545 A1 ist bereits ein Verfahren zum Umfüllen von Prozessmaterial zwischen einem Behältnis und einem Vorratsgefäß sowie eine entsprechende Vorrichtung hierzu bekannt, die zwar eine einfachere Mechanik aufweist, trotzdem aber eine Vielzahl von Verfahrensschritten umfasst. Daraus folgt auch, dass die Vorrichtungen und Verfahren aus dem Stand der Technik aufgrund der entweder komplexen Mechanik oder aber aufgrund der komplexen Verfahren fehleranfällig sind. Außerdem muss für die Anschaffung, das Betreiben und die Wartung/Instandhaltung derartiger Vorrichtungen ein hoher Aufwand betrieben werden. Zudem lassen sich die bekannten Vorrichtungen nur schlecht oder unter hohem Aufwand reinigen.

Weiter sind aus dem Stand der Technik bereits Vorrichtungen und Verfahren bekannt, die mit aufblasbaren Dichtungen arbeiten. Diese haben den Nachteil, dass die flexiblen Dichtungsmaterialien die Reinigung der Vorrichtung erschweren, da die Dichtung möglichst nicht beschädigt werden soll und deshalb keine aggressiven Reinigungsmittel zum Einsatz kommen können.

Ausgehend von dem vorgenannten Stand der Technik liegt der Erfindung die Aufgabe zugrunde, eine verbesserte Befüllungs- und/oder Entleerungsvorrichtung sowie ein verbessertes Verfahren zur Befüllung und/oder Entleerung von flexiblen Behältern anzugeben, bei denen einerseits die strengen Grenzwerte bezüglich der Kontamination der Umgebung eingehalten werden können, gleichzeitig jedoch eine mechanisch als auch verfahrensseitig einfachere Befüllung und/oder Entleerung ermöglicht wird, wodurch die Fehleranfälligkeit gesenkt und der Durchsatz erhöht werden kann.

Diese Aufgabe wird hinsichtlich des Verfahrens zur Befüllung und/oder Entleerung von flexiblen Behältern mit den Merkmalen des Anspruchs 1 gelöst.

Nachfolgend soll, soweit nicht anders angegeben, bei der Verwendung des Begriffs "Stutzen" der Befüll- und/oder Entleerstutzen gemeint sein.

Durch das erfindungsgemäße Verfahren wird eine Vielzahl von vorteilhaften Wirkungen erreicht. Zunächst wird erreicht, dass im Moment oder während des Vorgangs der Befüllung oder der Entleerung der Übergang zwischen Behälter und Stutzen im Inneren des Stutzens angeordnet ist, was ganz grundsätzlich die Möglichkeit zum Entweichen des Stoffes in die Umgebung reduziert. Gleichzeitig wird durch die Verwendung des Einwegbefestigungsringes im Zusammenspiel mit dem Stutzen und dem Dichtabschnitt des Stutzens, erreicht, dass ein radial äußerer Umschlagsabschnitt des Behälters gegen die Innenwand oder Innenoberfläche des Stutzens gepresst wird und damit im Bereich des Dichtabschnitts eine Abdichtung des Behälters gegenüber dem Stutzen erzeugt wird.

Anders ausgedrückt versteht der Fachmann das Zusammenspiel zwischen dem Einwegbefestigungsring, der radial verformbar ist, und dem Dichtabschnitt des Befüll- und/oder Entleerstuzens dahingehend, dass durch den Verfahrensschritt des Einpressens eine Abdichtung des Behälters sichergestellt werden kann.

Außerdem wird ein insgesamt einfacher Vorgang mit wenig einzelnen Verfahrensschritten realisiert, sodass insgesamt die Fehleranfälligkeit als auch die Möglichkeit zu Bedienerfehlern und damit das Risiko zu einer ungewollten Kontaminierung der Umgebung reduziert wird. Beispielsweise muss ein Bediener lediglich sicherstellen, dass ein entsprechender Umschlag des Behälters oder Behälterrandes um den Einwegbefestigungsring hergestellt ist, und dass der Einwegbefestigungsring mit einem ausreichenden Umschlagsabschnitt korrekt in den Endbereich des Stutzens eingesetzt ist. Im Anschluss daran muss der Bediener, beispielsweise durch Betätigung einer entsprechenden voll- oder teilautomatischen Mechanik, nur noch sicherstellen, dass der Einwegbefestigungsring axial in den Dichtabschnitt des Stutzens eingepresst wird und dass nach dem Befüllen oder nach dem Entleeren des Behälters eine entsprechende Versiegelung des Behälters sowie eine entsprechende Versiegelung des Einwegbefestigungsringes erzeugt wird.

Ein weiterer Vorteil der Erfindung liegt darin, dass der Einwegbefestigungsring bei einer Anwendung gemäß des erfindungsgemäßen Verfahrens zu keinem Zeitpunkt mit dem entladenen oder befüllten Stoff in Kontakt kommt. Dementsprechend wird die Gefahr einer Kontamination des Stoffes durch den Einwegbefestigungsring ausgeschlossen. Gleichzeitig wird auch erreicht, dass der Einwegbefestigungsring zu keinem Zeitpunkt des Verfahrens mit dem Stutzen unmittelbar oder direkt in Verbindung kommt. Dementsprechend wird auch eine Verunreinigung des Stutzens durch den Einwegbefestigungsring ausgeschlossen. Insgesamt kann dadurch das Material und auch die Reinheit des Einwegbefestigungsrings deutlich freier und ungebundener gewählt werden, da der Einwegbefestigungsring weder mit den Stoffen noch mit dem Stutzen unmittelbar in Kontakt kommt.

Bei dem Befüll- und/oder Entleerstutzen oder kurz Stutzen kann es sich um grundsätzlich jedweden Stutzen handeln, der eine Verbindung zu einer Befüllvorrichtung oder eine Verbindung zu einer Entleervorrichtung herstellt. Grundsätzlich kommen dabei unterschiedlichste Formen und Ausgestaltungen von Abfüllanlagen oder Abfülleinrichtungen sowie Entleerungsanlagen oder Entleervorrichtungen in Frage. Wichtig in diesem Zusammenhang ist hauptsächlich der Umstand, dass der Stutzen, möglichst ohne weitere potentielle Undichtigkeitsstellen, mit dem Rest der Anlage oder Vorrichtung verbunden ist oder verbunden werden kann, sodass ein entsprechend dichter Gesamtzusammenhang erreicht wird. Als Material kann beispielsweise Edelstahl zum Einsatz kommen. Der Stutzen gemäß der vorliegenden Erfindung ist dabei in vorteilhafter Weise extrem einfach ausgestaltet. Er kann im Wesentlichen aus einem einfachen Rohrstutzen gebildet sein. Je nach Ausgestaltung des Einwegbefestigungsringes kann sogar ein unveränderter oder nur minimal veränderter Innendurchmesser benötigt werden, um das Verfahren durchzuführen. Allein durch die einfache Ausgestaltung des Stutzens zeigen sich die enormen Vorteile des erfindungsgemäßen Verfahrens, da im Stand der Technik teilweise hochkomplexe Ankopplungs- oder Übergangsstrukturen an den Rest einer Befüllungs- oder Entleerungsvorrichtung verwendet werden, die entsprechen in Herstellung Wartung und Bedienbarkeit nachteilig sind.

Im Rahmen des erfindungsgemäß vorgesehenen Verfahrensschritts des Einfügens des Einwegbefestigungsrings in den Endbereich des Stutzens ist selbstredend vorgesehen, dass dabei der Umschlag des Behälterrandes um den Einwegbefestigungsring beibehalten oder aufrechterhalten wird. Zudem kann vorteilhaft vorgesehen sein, dass ein radial äußerer Umschlagsabschnitt des Behälterrandes, also der Bereich des Umschlags des Behälterrandes um den Einwegbefestigungsring, welcher zwischen dem Endbereich des Stutzens und dem Einwegbefestigungsring angeordnet ist, so groß oder so lang gewählt wird, dass der besagte Umschlagsabschnitt nicht nur um den Einwegbefestigungsring umgeschlagen werden kann, sondern auch aus dem Endbereich des Stutzens wieder herausgeführt und über einen Rand des Endbereichs des Stutzens gelegt oder gekrempelt werden kann.

Das Einpressen, insbesondere das mechanische Einpressen, des Einwegbefestigungsringes soll erfindungsgemäß so ausgeführt werden, dass der Umschlag des Behälterrandes um den Einwegbefestigungsring beibehalten wird. Vorteilhaft kann auch vorgesehen sein, dass der um den Rand des Endbereichs gelegte Teil des radial äußeren Umschlagsabschnitts während des Einpressens des Einwegbefestigungsringes dort verbleibt, dass also der entsprechende Umschlagsabschnitt nach Möglichkeit nicht während des Einpressens des Einwegbefestigungsringes in den Dichtabschnitt über den Rand des Endbereichs des Stutzens in das Innere des Stutzens eingezogen wird.

Die Mittel zum Durchführen des Einpressens, insbesondere des mechanischen Einpressens, werden nachfolgend, insbesondere auch in Bezug auf die erfindungsgemäße Vorrichtung, noch eingehender beschrieben. Bei dem Einpressen des Einwegbefestigungsringes soll eine radiale Stauchung oder eine radiale, bevorzugt elastische, Verformung des Ringes mit einer entsprechenden entgegengesetzt wirkenden Rückstell- oder Anpresskraft, ebenfalls in radialer Richtung, erzeugt werden, die zumindest die Abdichtung zwischen Stutzen und Behälterrand begünstigt oder sogar herstellt. Dazu muss der Einwegbefestigungsring einerseits eine gewisse Verformbarkeit aufweisen, andererseits jedoch auch eine entsprechende Steifigkeit aufweisen, sodass sowohl das Einpressen in den Dichtabschnitt unter Verformung als auch die Erzeugung einer entsprechend entgegenwirkenden und die Dichtung befördernden Rückstellkraft, insbesondere Klemmkraft auf den radial äußeren Umschlagsabschnitt des Behälterrandes, erzeugt werden kann.

Das Befüllen oder Entleeren des Behälters kann in an sich bekannter Weise erfolgen. Gleiches gilt auch für das Versiegeln und Abtrennen des befüllten oder entleerten Behälters. Dazu können beispielsweise an sich bekannte Doppel-Clips zum Einsatz kommen. Auch das Versiegeln des Umschlagsabschnitts unter Einkapselung des Einwegbefestigungsringes kann durch an sich bekannte Clips oder sonstige Verschlussmittel erreicht werden.

Gemäß einer ersten vorteilhaften Variante des erfindungsgemäßen Verfahrens kann vorgesehen sein, dass durch das Einfügen und/oder Einpressen eines nachfolgenden Einwegbefestigungsringes ein bereits im Dichtabschnitt des Stutzens befindlicher, insbesondere versiegelter, Einwegbefestigungsring in einen axial dem Dichtabschnitt nachgeordneten Entnahmeabschnitt des Stutzens überführt wird, wobei der Entnahmeabschnitt bevorzugt einen gegenüber dem Dichtabschnitt vergrößerten Innendurchmesser aufweist. Durch diese Verfahrensvariante wird ebenfalls eine Vielzahl vorteilhafter Wirkungen erzeugt.

Einerseits wird dadurch, dass der vorteilhaft versiegelte oder eingekapselte Einwegbefestigungsring zunächst im Dichtabschnitt verbleibt, sichergestellt, dass der Stutzen nach Abtrennen des befüllten oder entleerten Behälters gegenüber der Außenwelt bzw. gegenüber der Umgebung abgeschlossen oder versiegelt ist. Dies bedeutet, dass durch den Verbleib des bevorzugt eingekapselten oder umschlossenen Einwegbefestigungsringes im Dichtabschnitt eine Kontamination der Anlage von außen, zumindest jenseits des Dichtabschnitts, verhindert wird. Gleichzeitig wird durch die vorteilhafte Verfahrensvariante ermöglicht, dass der eingeschlossene oder eingekapselte Einwegbefestigungsring, mitsamt dem bevorzugt die Einkapselung bereitstellenden Umschlagsabschnitt des abgetrennten Behälters, automatisch im Rahmen eines Befüllvorgangs oder Entleerungsvorgangs eines nächsten Behälters in eine Entnahmeposition oder zumindest in eine Position, die eine Entnahme des bevorzugt eingekapselten Einwegbefestigungsringes ermöglicht, überführt wird. Dadurch wird also in erheblicher Weise die Anzahl an einzelnen Verfahrensschritten reduziert, da das Einleiten eines nachfolgenden Befüllungsvorgangs oder Entleerungsvorgangs gleichermaßen die Entnahme oder Ausschleusung der im Stutzen verbliebenen Reste eines vorangegangenen Befüllungs- oder Entleerungsvorgangs bewirkt oder zumindest einleitet.

In einer weiteren, besonders vorteilhaften Ausgestaltung des Verfahrens kann zudem vorgesehen sein, dass ein im Entnahmebereich des Stutzens befindlicher, insbesondere versiegelter, Einwegbefestigungsring durch einen, bevorzugt axial dem Entnahmebereich nachgeordneten, in den Stutzen mündenden Ausschleusungskanal, insbesondere händisch, entnommen wird. Damit kann auch die Entnahme eines durch die Befüllung oder Entleerung eines vorangehenden Behälters im Stutzen zurückbleibende Anordnung aus Einwegbefestigungsring und Umschlagsabschnitt in besonders einfacher Weise gestaltet und gleichzeitig in den Verfahrensablauf der Befüllung oder Entleerung des nachfolgenden Behälters integriert werden, sodass eine insgesamt einfache und kompakte Verfahrensführung erlaubt wird. In diesem Zusammenhang hat es sich als besonders vorteilhaft herausgestellt, wenn der Entnahmeabschnitt einen Innendurchmesser aufweist, der zwar einerseits so groß gewählt ist, dass der Einwegbefestigungsring weiterhin eine Klemmkraft, in Form einer Rückstellkraft auf eine Verformung, auf den Stutzen ausübt, sodass er nicht oder zumindest nicht von selbst im Stutzen, insbesondere im Entnahmeabschnitt des Stutzens, verrutscht, gleichzeitig der Innendurchmesser aber so gewählt wird, dass eine händische Entnahme des im Entnahmeabschnitts geklemmten oder gehaltenen Einwegbefestigungsringes ermöglicht wird. Die oben bereits diskutierte Teil-Verformbarkeit oder Teil-Elastizität des Einwegbefestigungsringes kommt auch bei der Entnahme des Einwegbefestigungsringes durch den Ausschleusungskanal zum Tragen. Denn der Ausschleusungskanal wird vorteilhaft so dimensioniert oder in seinen Abmessungen an die Eigenschaften des Einwegbefestigungsringes angepasst, dass unter einer zerstörungsfreien Verformung des Einwegbefestigungsringes die Entnahme aus dem Ausschleusungskanal oder durch den Ausschleusungskanal ermöglicht wird.

Gemäß einer weiteren besonders vorteilhaften Ausgestaltung des erfindungsgemäßen Verfahrens kann zudem vorgesehen sein, dass bei der Entnahme des Einwegbefestigungsringes eine, insbesondere weitere, Einkapselung des Einwegbefestigungsringes und des Umschlagsabschnitts hergestellt wird. Dazu kann ein grundsätzlich bekannter Endlosrohrbehälter oder Endlosliner zum Einsatz kommen, der entsprechend an dem Ausschleusungskanal angeordnet ist und der während der Ausschleusung oder Entnahme des Einwegbefestigungsringes vor und nach dem Einwegbefestigungsring versiegelt oder verschlossen wird und anschließend abgetrennt wird. Dies führt in besonders vorteilhafter Weise dazu, dass auch die ggf. noch an dem Umschlagsabschnitt eines Behälters befindlichen Reste oder Überreste des Stoffes sicher abgeschirmt und entsorgt werden können.

Eine weitere besonders bevorzugte Ausführungsform des Verfahrens sieht vor, dass der Einwegbefestigungsring im Dichtabschnitt axial gehalten und/oder radial an den Dichtabschnitt angepresst wird, bevorzugt mit einem Werkzeug, welches auch das Einpressen in den Dichtabschnitt bewerkstelligt hat. Dadurch werden abermals die Komplexität des Verfahrens sowie die Komplexität der entsprechenden Vorrichtung, auf die weiter unten noch eingegangen wird, herabgesetzt. Denn abgesehen von der, bevorzugt händischen, Einlegung des Einwegbefestigungsringes samt Umschlagsabschnitt in den Endbereich des Stutzens wird durch das Einpressen und Halten des Einwegbefestigungsringes mit ein und demselben Werkzeug ermöglicht, das gesamte Verfahren weitestgehend unter Verwendung des sowieso benötigten Stutzens und eines einzigen weiteren Vorrichtungsmerkmals, nämlich dem Werkzeug zum Einpressen und Halten des Befestigungsringes, durchgeführt wird.

Hinsichtlich der erfindungsgemäßen Befüllungs- und/oder Entleerungsvorrichtung zum Befüllen und/oder Entleeren von flexiblen Behältern, insbesondere Säcken, mit, insbesondere gefährlichen, losen Stoffen, bevorzugt in Pulverform, umfassend einen Befüll- und/oder Entleerstutzen mit einem offenen Endbereich wird die oben genannte Aufgabe dadurch gelöst, dass zumindest ein verformbarer Einwegbefestigungsring vorgesehen ist, wobei der Einwegbefestigungsring im Verhältnis zum Innendurchmesser des Befüll- und/oder Entleerstutzens so ausgebildet ist, dass nach einem Umschlagen eines Behälterrandes um den Befestigungsring, bevorzugt von radial innen nach außen, ein Einfügen, insbesondere händisches Einfügen, des Einwegbefestigungsringes in einen Endbereich des Befüll- und/oder Entleerstutzens ermöglicht wird, sodass der Einwegbefestigungsring im Wesentlichen konzentrisch zum Befüll- und/oder Entleerstutzens und ein radial äußerer Umschlagsabschnitt des Behälterrandes zwischen einer Innenoberfläche des Befüll- und/oder Entleerstutzens und einer radial äußeren Oberfläche des Einwegbefestigungsringes angeordnet und/oder geklemmt wird und zudem der Einwegbefestigungsring im Verhältnis zum Innendurchmesser des Befüll- und/oder Entleerstutzens so ausgebildet ist, dass ein Einpressen, insbesondere mechanisches Einpressen, des Einwegbefestigungsringes in einen Dichtabschnitt des Befüll- und/oder Entleerstutzens, der dem Endbereich in axialer Richtung nachgeordnet angeordnet ist und bevorzugt einen geringeren Innendurchmesser aufweist als der Endbereich, möglich ist, wobei der Einwegbefestigungsring eine zumindest teilweise, bevorzugt elastische, Verformbarkeit in radialer Richtung aufweist, sodass das Einfügen und/oder Einpressen in das Innere des Befüll- und/oder Entleerstutzens zu einer radialen Verformung und einer entgegengesetzten Anpresskraft, insbesondere elastischen Rückstellkraft, führt, welche den äußeren Umschlagsabschnitt des Behälterrandes gegen die Innenoberfläche des Befüll- und/oder Entleerstutzens presst und dabei den Behälter gegenüber dem Befüll- und/oder Entleerstutzen abdichtet.

Mit der erfindungsgemäßen Vorrichtung werden im weitesten Sinne die gleichen Vorteile und Wirkungen erzielt wie durch das oben bereits beschriebene Verfahren. Insoweit wird hinsichtlich der Vorrichtungsmerkmale auf die entsprechenden Verfahrensschritte und deren Wirkung, auch hinsichtlich der nachfolgenden Ausführungsformen der Vorrichtung, Bezug genommen. Auch umgekehrt soll für die Verfahrensschritte und Verfahrensmerkmale, soweit notwendig, auf die Beschreibung der Vorrichtung verwiesen werden.

Folglich wird durch die erfindungsgemäße Vorrichtung, insbesondere durch die Anpassung des Einwegbefestigungsringes an den Innendurchmesser des Stutzens, insbesondere an die bevorzugt veränderlichen Innendurchmesser des Stutzens in den unterschiedlichen Bereichen oder Abschnitten, ein sowohl auf einer mechanischen, gegenständlichen Ebene als auch auf einer Verfahrensebene oder Bedienebene eine erhebliche Vereinfachung und damit Erleichterung sowie eine Vermeidung von Fehlbedienungen und entsprechenden Fehlfunktionen erzielt. Gleichzeitig wird in sehr überraschender Weise trotz des verhältnismäßig einfach gehaltenen Verfahrens und der entsprechenden Vorrichtung zur Durchführung des Verfahrens ein besonders hohes Maß an Abdichtung und damit eine überaus geringe Verunreinigung der Umgebung bewirkt.

In einer ersten Ausführungsform der erfindungsgemäßen Vorrichtung kann vorgesehen sein, dass der Befüll- und/oder Entleerstutzen einen axial dem Dichtabschnitt nachgeordneten Entnahmeaufschnitt aufweist, wobei der Entnahmeabschnitt bevorzugt einen gegenüber dem Dichtabschnitt vergrößerten Innendurchmesser aufweist, wobei weiter bevorzugt der Entnahmeabschnitt so gegenüber dem Dichtabschnitt ausgebildet ist, dass das Einfügen und/oder Einpressen eines nachfolgenden Einwegbefestigungsringes einen im Dichtabschnitt befindlichen, insbesondere versiegelten, Einwegbefestigungsring in einen Entnahmeabschnitt überführt.

Wie oben bereits skizziert, wird also durch die Anordnung von Dichtabschnitt und Entnahmeabschnitt, besonders bevorzugt durch die Verwirklichung eines Endbereichs, eines Dichtabschnitts und eines anschließenden Entnahmeabschnitts erreicht, dass die nach einem Befüllvorgang oder einen Entleerungsvorgang im Stutzen verbleibenden Reste, insbesondere der Einwegbefestigungsring und der Umschlagsabschnitt, zunächst eine Abdichtung des Stutzens nach außen hin sicherstellen und im Anschluss daran automatisch im Rahmen eines nachfolgenden Entleerungs- oder Befüllungsvorgangs in eine Entnahmeposition oder einen Entnahmeabschnitt überführt werden, der die Entnahme aus dem Stutzen bewirkt oder zumindest einleitet. Die automatische, durch den nachfolgenden Befüllungs- oder Entleerungsvorgang initiierte Überführung in den Entnahmeabschnitt des Stutzens sorgt also dafür, dass ein ansonsten separat zu bewerkstelligender Verfahrensschritt wegfällt oder vielmehr selbständig oder automatisch durchgeführt wird.

Weiter ist in einer ebenfalls bevorzugten Ausgestaltung der Vorrichtung vorsehbar, dass ein bevorzugt axial dem Entnahmebereich nachgeordnet angeordneter, in dem Befüll- und/oder Entleerstutzen mündender Ausschleusungskanal vorgesehen ist, der so bezüglich des Entnahmeabschnitts angeordnet ist, dass ein im Entnahmeabschnitt des Befüll- und/oder Entleerstutzens befindlicher, insbesondere versiegelter, Einwegbefestigungsring durch den Ausschleusungskanal, insbesondere händisch, entnommen werden kann.

Dabei kann ein am Ausschleusungskanal befestigter und/oder angeordneter Endlosliner zum Einsatz kommen, um einerseits den Zugriff oder Eingriff in das Innere des Stutzens zu ermöglichen und andererseits die weitere Einkapselung des Einwegbefestigungsrings zu erreichen. Alternativ oder zusätzlich kann am Stutzen auch zumindest eine Handschuh-Eingriffsvorrichtung vorgesehen sein, die es über einen ansonsten vom Inneren des Stutzen abgedichtet angeordneten Handschuh ermöglicht in das Innere des Stutzens einzugreifen, um dort den Einwegbefestigungsring und/oder den zurückbleibenden Behälterrand zu handhaben. Die Handhabung kann die Entfernung aus dem Entnahmeabschnitt und/oder eine weitere Einkapselung betreffen.

Bevorzugt ist die zumindest eine Handschuh-Eingriffsvorrichtung in axialer Richtung auf der gleichen Höhe wie der Ausschleusungskanal oder zwischen Ausschleusungskanal und Entnahmeabschnitt angeordnet. Dadurch wird ein einfacher Zugriff auf diese Bereiche des Stutzens ermöglicht.

Die Handschuh-Eingriffsvorrichtung kann auch durch eine vom Stutzen separate Vorrichtung bereit gestellt werden. Beispielsweise kann die erfindungsgemäße Vorrichtung mit einem Isolator oder einer vergleichbaren Vorrichtung kombiniert werden, die eine Glove-Box oder eine ähnliche Handschuh-Eingriffsvorrichtung umfasst. Bei einer entsprechenden Anordnung des Stutzens gegenüber der weiteren Vorrichtung kann erreicht werden, dass ein Zugriff in Innere des Stutzen zum Entfernen oder Entnehmen eines verschlossenen oder versiegelten Einwegbefestigungsring möglich ist. Bevorzugt kann dann eine Auschleusungseinheit der separaten Vorrichtung umfassend die Handschuh-Eingriffsvorrichtung als Ausschleusungskanal genutzt werden.

Gemäß einer weiteren vorteilhaften Ausführungsform der Vorrichtung kann vorgesehen sein, dass ein Werkzeug zum Überführen des Einwegbefestigungsringes vom Endbereich in den Dichtabschnitt des Stutzens vorgesehen ist, wozu das Werkzeug in axialer Richtung aus einer Freigabeposition in eine Dichtposition axial verstellbar ist. Bei der Überführung des Einwegbefestigungsringes soll selbstverständlich auch die entsprechende Mitnahme oder Überführung des Umschlagsabschnitts des Behälters realisiert werden. Das Werkzeug kann grundsätzlich unterschiedliche Antriebe oder Mechanismen zur Verstellung zwischen der Freigabeposition und der Dichtposition aufweisen. Beispielhaft seien hier pneumatische Antriebe genannt. Das Werkzeug kann so ausgebildet sein, dass ein punktueller, abschnittsweiser oder vollumfänglicher Kontakt zu dem Einwegbefestigungsring hergestellt wird. Die Ausgestaltung des Werkzeugs sollte aber auf jeden Fall sicherstellen, dass der Einwegbefestigungsring gleichmäßig und beschädigungsfrei aus der eingelegten Position im Endbereich des Stutzens in die dichtende Position im Dichtabschnitt des Stutzens überführt werden kann. Die Aktivierung des Werkzeugs kann beispielsweise durch eine entsprechende Sicherheitsaktivierungseinheit von einem Bediener ausgelöst werden, um einerseits sicherzustellen, dass das Werkzeug nur betätigt wird, wenn der Einwegbefestigungsring samt Umschlagsabschnitt des Behälterrandes korrekt in den Endbereich des Stutzens eingelegt ist und zudem keine Verletzungsgefahr oder sonstige Gefahr besteht.

Gemäß einer vorteilhaften Ausführungsform kann zudem vorgesehen sein, dass das Werkzeug einen Kontaktabschnitt aufweist, mit dem der Einwegbefestigungsring in der Dichtposition des Werkzeugs axial im Dichtabschnitt gehalten und/oder radial an den Dichtabschnitt angepresst wird. Der Kontaktabschnitt ist bevorzugt der Teil des Werkzeugs, der die Überführung des Einwegbefestigungsringes aus dem Endbereich des Stutzens in den Dichtabschnitt des Stutzens bewirkt oder herbeiführt. Wenn, gemäß der vorteilhaften Ausführungsform, gleichzeitig erreicht wird, dass mit dem Kontaktabschnitt ein axiales Halten und/oder ein radiales Anpressen des Einwegbefestigungsringes erreicht wird, so wird durch diese Ausgestaltungsform abermals die Konstruktion der Vorrichtung insgesamt und gleichermaßen auch die Durchführung des Verfahrens vereinfacht und effektiviert. Denn dadurch wird sichergestellt, dass mit ein und demselben Werkzeug, insbesondere mit dem Kontaktabschnitt des Werkzeugs, nicht nur das Einpressen des Einwegbefestigungsringes bewerkstelligt werden kann, sondern auch ein axiales Halten sowie ggf. zusätzlich oder alternativ auch ein radiales Anpressen zur weiteren Unterstützung der Abdichtung zwischen Behälter und Stutzen erzielt werden kann. Dazu kann beispielsweise vorgesehen sein, dass der Kontaktabschnitt des Werkzeugs entsprechende Spreizmittel oder Klappmittel aufweist, um eine Radialkraft zu erzeugen oder zu vergrößern. Auch eine in axialer Richtung verlaufende radiale Aufweitung des Kontaktabschnittes des Werkzeugs kann dazu beitragen, dass der Einwegbefestigungsring mitsamt des Umschlagabschnitts des Behälterrandes in dem Dichtabschnitt axial gehalten und/oder radial angepresst wird.

Gemäß einer ebenfalls vorteilhaften Ausführungsform der Vorrichtung kann vorgesehen sein, dass das Werkzeug einen Aufsatzabschnitt aufweist, der in der Dichtposition des Werkzeugs auf einem axialen Rand des Endbereichs des Befüll- und/oder Entleerstutzens aufsitzt. Durch einen derart ausgestalteten Aufsatzabschnitt des Werkzeugs kann zusätzlich eine weitere Barriere zwischen dem Stutzen und dem Behälter, insbesondere dem Behälterinneren, erzeugt werden und damit die dichte Abschottung des Behälters gegenüber der Umgebung oder Außenwelt im Rahmen der Befüllung oder Entleerung weiter verbessert werden.

Denn, wie oben bereits beschrieben, ist bevorzugt der radial äußere Umschlagsabschnitt nicht nur an den Stutzen von innen angepresst, sondern auch aus dem Stutzen herausgeführt und über einen Rand im Endbereich des Stutzens gelegt oder gekrempelt. Erreicht das Werkzeug nunmehr die Dichtposition, kommt der Aufsatzabschnitt des Werkzeugs mit dem Rand des Endbereichs des Stutzens, zumindest mittelbar, zur Anlage, was bedeutet, dass der Aufsatzabschnitt des Werkzeugs abermals eine Klemmung oder Anpressung des radial äußeren Umschlagsabschnitts an den Stutzen im Bereich des Randes des Endbereichs bewirkt. Dadurch wird zusätzlich zu dem im Inneren des Stutzens befindlichen Dichtabschnitts eine weitere Abdichtung zwischen Stutzen und Behälter, nämlich im Bereich des Endbereichs des Stutzens, bewirkt.

Besonders bevorzugt kann dabei vorgesehen sein, dass im Bereich des Aufsitzabschnitts des Werkzeugs und/oder auf einer gegenüberliegenden Fläche des Stutzens, beispielsweise im Bereich des Rands des Stutzen, Dichtmittel angeordnet sind, welche bei der Erreichung der Dichtposition des Werkzeugs eine Dichtung zwischen Stutzen und Behälterrand bewirken, und welche gegebenenfalls zusätzlich auch eine Klemmung des Behälterrandes, beispielsweise zwischen den Dichtmitteln, erzeugen.

Gemäß einer weiteren vorteilhaften Ausführungsform der Vorrichtung kann vorgesehen sein, dass der zumindest eine Einwegbefestigungsring aus einem Polymermaterial, insbesondere aus Polyamid oder Polyurethan, gefertigt ist. Derartige Materialien erlauben eine weitgehend freie Einstellung zwischen verformbaren und/oder elastischen und starren Werkstoffeigenschaften, sodass die notwendige Anpassung der teilweisen Verformbarkeit des Einwegbefestigungsringes an die jeweiligen Bereiche und Abschnitte des Stutzens sowie ggf. an die Abmessungen oder Eigenschaften des Ausschleusungskanals angepasst werden können.

Ebenfalls vorteilhaft kann vorgesehen sein, dass der Einwegbefestigungsring ein Querschnitts-Profil mit zumindest zwei winklig zueinander angeordneten, miteinander verbundenen Schenkeln aufweist. Durch die Ausbildung des Einwegbefestigungsringes mit einer mehrschenkligen Struktur, beispielsweise mit einer V- oder W-Form, kann in vorteilhafter Weise erreicht werden, dass der Einwegbefestigungsring von sich aus oder in Zusammenwirkung mit dem Werkzeug eine entsprechende von innen nach außen gerichtete Anpresskraft auf den radial äußeren Umschlagsabschnitt sowie auf den Dichtabschnitt des Stutzens ausübt. Gleichermaßen kann durch ein solches Querschnitts-Profil des Einwegbefestigungsringes eine Materialersparnis erzeugt werden. Gleichermaßen kann ein solches Querschnitts-Profil sinnvoll sein, um den Einwegbefestigungsring bei der Entnahme aus einem Ausschleusungskanal in einfacher Weise zu verformen, beispielsweise auch plastisch zu verformen.

Gemäß einer weiteren besonders bevorzugten Ausgestaltungsweise der Vorrichtung kann es zudem vorgesehen sein, dass der Einwegbefestigungsring auf einer radial äußeren Oberfläche, bevorzugt auf einem radial äußeren Schenkel, eine Oberflächenprofilierung aufweist. Die Profilierung kann einstückig mit dem sonstigen Einwegbefestigungsring ausgebildet sein. Die Profilierung kann zu einer verbesserten Dichtwirkung sowie zu einer besseren Haltewirkung führen und somit sicherstellen, dass sowohl im Endbereich, im Dichtabschnitt und/oder im Entnahmeabschnitt der Einwegbefestigungsring sicher gehalten wird und insbesondere im Dichtabschnitt eine hervorragende Abdichtung zwischen dem Stutzen und dem Behälterrand ausbildet. Beispielsweise kann der Einwegbefestigungsring als einteiliges Spritzgussteil ausgebildet sein, wodurch sowohl eine Ausbildung mit einem Querschnittsprofil, besonders bevorzugt in Form eines mehrschenkligen Profils, ausgebildet werden kann und gleichzeitig auch eine Profilierung der radial äußeren Oberfläche, bevorzugt auf einem radial äußeren Schenkel, ausgebildet werden kann.

Ebenfalls kann gemäß einer besonders vorteilhaften Ausführungsform vorgesehen sein, dass der Innendurchmesser des Endbereichs 0,2% bis 1,5% größer ist als der Innendurchmesser des Dichtabschnitts. Dadurch kann beispielsweise sichergestellt werden, dass ein Einlegen des Einwegbefestigungsrings, samt umgeschlagenem Behälterrand, in den Endbereich von Hand und ohne besonders große Kraftaufwendung möglich ist. Weiter kann erreicht werden, dass die Verringerung des Innendurchmessers hin zum Dichtabschnitt die entsprechende radiale Verformung des Einwegbefestigungsrings bewirkt und dementsprechend eine sichere Klemmung des Einwegbefestigungsrings sowie des Behälterrandes im Dichtabschnitt hervorruft. Die Verringerung des Innendurchmessers um 0,2% bis 1,5% kann dabei schon ausreichend sein, um bei der entsprechenden Gestaltung, insbesondere bei der entsprechenden Materialwahl des Einwegbefestigungsrings, eine entsprechend große Kraft zur axialen Bewegung des Einwegbefestigungsringes aus dem Endbereich in den Dichtabschnitt notwendig zu machen. Dementsprechend kann bevorzugt ein pneumatisches Werkzeug zum Einsatz kommen, um den Einwegbefestigungsring in den Dichtabschnitt einzupressen.

Ebenfalls kann gemäß einer weiteren, besonders bevorzugten Ausführungsform vorgesehen sein, dass der Innendurchmesser des Entnahmeabschnitts 0,2% bis 1,5% größer ist als der Innendurchmesser des Dichtabschnitts. Dadurch kann bei einer entsprechenden Überführung des Einwegbefestigungsringes, insbesondere samt abgetrenntem Umschlagsabschnitt, sichergestellt werden, dass der Einwegbefestigungsring aus dem Entnahmeabschnitt entnommen werden kann, was besonders bevorzugt abermals händisch erfolgt. Die Überführung des Einwegbefestigungsrings aus dem Dichtabschnitt in den Entnahmeabschnitt wird bevorzugt mittelbar über ein Werkzeug und unmittelbar über einen nachfolgenden Einwegbefestigungsring samt Umschlagsabschnitt bewerkstelligt. Auch in diesem Zusammenhang unterstützt die Aufweitung des Innendurchmessers vom Dichtabschnitt in den Entnahmeabschnitt die Überführbarkeit sowie die notwendige Kraft zur Überführung in den Entnahmeabschnitt.

Ebenfalls kann in einer besonders vorteilhaften Ausgestaltung der Vorrichtung vorgesehen sein, dass der Dichtabschnitt durch eine, bevorzugt von außen in den Befüll- und/oder Entleerstutzen eingebrachte, Sicke ausgebildet wird. Diese kann sich bevorzugt über den gesamten Umfang des Stutzens erstrecken. Es kann alternativ aber auch eine abschnittswiese Ausbildung vorgesehen sein, wobei die Abschnitte, bevorzugt gleichmäßig und/oder symmetrisch, über den gesamten Umfang verteilt angeordnet sind. Dies bedeutet, dass die bevorzugt im Dichtabschnitt veränderte Form des Innendurchmessers des Stutzens, insbesondere die Verringerung des Innendurchmessers im Bereich des Dichtabschnitts, durch eine von außen eingebrachte oder eingeprägte Verformung des Stutzens ermöglicht oder bereitgestellt wird. Dies bedeutet, dass beispielsweise an einem an sich außen und innen glatten zylindrischen Stutzen ein Verformungsverfahren vorgenommen wird, welches in einem axialen Bereich auf dem vollständigen Umfang oder in Abschnitten des Umfangs zu einer Verjüngung des Außendurchmessers führt. Das Verformungsverfahren kann beispielsweise von außen auf den Bereich wirkende Druckkräfte umfassen, gegebenenfalls in einer Presse. Durch die Verformung der Außenoberfläche und/oder des Außendurchmessers wird, sofern keine Widerstand im Inneren des Stutzens angeordnet wird, wird die Verformung auch auf die Innenseite des Stutzens und die Innenoberfläche des Stutzens auswirken oder durchschlagen. Diese von außen eingebrachte Verformung der Innenoberfläche des Stutzens kann dann die Ausbildung des Dichtabschnitts des Stutzens bewirken.

In einer alternativen Ausgestaltungsvariante kann jedoch auch vorgesehen sein, dass die Veränderung des Innendurchmessers, insbesondere zur Ausbildung des Dichtabschnitts des Stutzen zwar von außen eingebracht oder eingeprägt wird, im Gegensatz zur vorangehend beschriebenen Ausführungsform jedoch nicht einmalig und dauerhaft sondern aktuell und reversibel. Dazu kann ein entsprechender Stutzen mit einer gewissen radialen Grundelastizität vorgesehen werden. An diesem Kann außen, bevorzugt im Bereich der Ausbildung des Dichtabschnitts, ein Verformungsmittel, beispielsweise eine den Stutzen in Umfangsrichtung umschließende exbandierbare, bevorzugt aufblasbare Manschette, vorgesehen sein, die durch eine Expansion nach radial innen eine Kraft auf den Stutzen ausübt und diesen reversibel so verformt, dass der Innendurchmesser verringert wird. So kann die Anpressung des Einwegbefestigungsring an den Stutzen weiter verbessert werden. Insbesondere kann eine individuelle Anpressung erfolgen, beispielsweise um Toleranzen der Einwegbefestigungsringe auszugleichen oder Unterschiede die durch das Umschlagen oder Umkrempeln des Behälterrandes um den Einwegbefestigungsring entstehen.

Es kann bevorzugt auch eine statische dauerhafte Verformung des Innendurchmessers mit einer dynamischen reversiblen Verformung kombiniert werden.

Weitere Vorteile, Merkmale und Einzelheiten der Erfindung ergeben sich aus den nachfolgenden Beschreibungen bevorzugter Ausführungsbeispiele sowie anhand der Zeichnungen.

Diese zeigen in
- Fig. 1:: eine schematische Darstellung eines Schnitts durch die erfindungsgemäße Vorrichtung in einem ersten Verfahrenszustand;
- Fig. 2:: eine schematische Darstellung eines Schnitts durch eine erfindungsgemäße Vorrichtung in einer zweiten Verfahrenssituation des erfindungsgemäßen Verfahrens;
- Fig. 3:: ein schematischer Schnitt durch eine erfindungsgemäße Vorrichtung in einem weiteren Verfahrensschritt des erfindungsgemäßen Verfahrens;
- Fig. 4:: ein schematischer Schnitt durch eine erfindungsgemäße Vorrichtung in einem weiteren Verfahrensschritt des erfindungsgemäßen Verfahrens;
- Fig. 5:: ein schematischer Schnitt durch eine erfindungsgemäße Vorrichtung in einem weiteren Verfahrensschritt des erfindungsgemäßen Verfahrens;
- Fig. 6:: ein schematischer Schnitt durch eine erfindungsgemäße Vorrichtung in einem weiteren Verfahrensschritt des erfindungsgemäßen Verfahrens;
- Fig. 7:: ein schematischer Schnitt durch eine erfindungsgemäße Vorrichtung in einem weiteren Verfahrensschritt des erfindungsgemäßen Verfahrens;
- Fig. 8:: eine schematische Darstellung eines Einwegbefestigungsrings gemäß einer ersten Ausführungsform;
- Fig. 9:: ein Schnitt durch einen Einwegbefestigungsring gemäß der Darstellung der Fig. 8;
- Fig. 10:: eine schematische Darstellung einer erfindungsgemäßen Vorrichtung in einer zweite Ausführungsform.

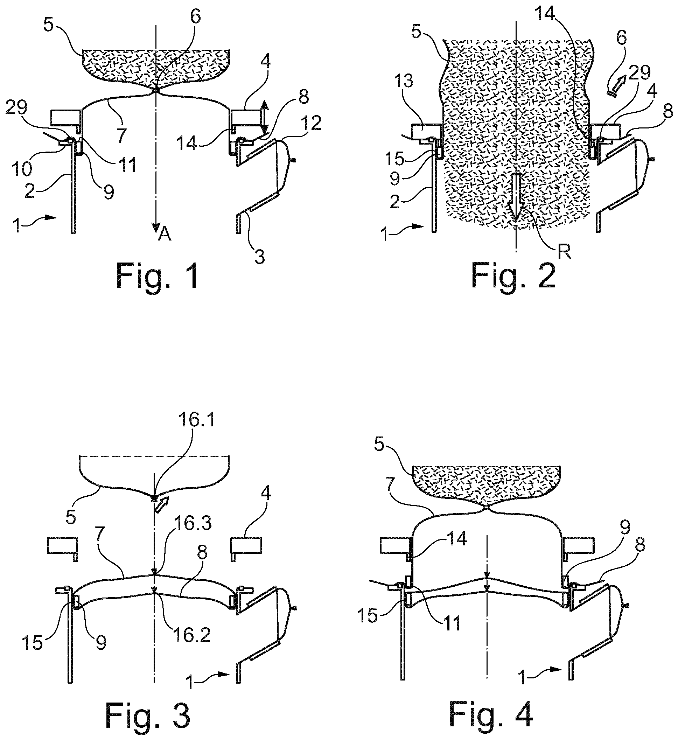

Fig. 1 zeigt eine Befüllungs- und/oder Entleerungsvorrichtung 1, die im nachfolgenden auch als Vorrichtung 1 bezeichnet werden soll. Die wesentlichen Bestandteile der Vorrichtung 1 umfassen den Befüll- und/oder Entleerstutzen 2, der nachfolgend auch kurz als Stutzen 2 bezeichnet werden soll. Weiter umfasst die Vorrichtung einen seitlich angeordneten Ausschleusungskanal 3 und ein in axialer Richtung A bewegbares Werkzeug 4, welches zwischen einer Freigabeposition und einer Dichtposition axial verstellbar ist. In der Darstellung der Fig. 1 wird das Werkzeug 4 gerade in Richtung des Stutzens 2 bewegt und somit aus einer Freigabeposition in eine Dichtposition überführt, welche in der Situation der Fig. 2 erreicht und nachfolgend noch eingehender beschrieben werden wird.

In der Fig. 1 ebenfalls erkennbar ist ein gefüllter Behälter 5, der im Verfahrensstadium der Fig. 1 mit einem Verschluss 6 verschlossen ist. Ein jenseits des Verschlusses 6 angeordneter Behälterrand 7 ist jedoch in einem Umschlagsabschnitt 8 von radial innen nach radial außen um einen Einwegbefestigungsring 9 umgeschlagen und auf der radial äußeren Seite des Einwegbefestigungsrings 9 verläuft der radial äußere Umschlagsabschnitt 8 über den Rand 10 des Stutzens 2 hinweg.

In der Darstellung der Fig. 1 ist der Einwegbefestigungsring 9 in einem Endbereich 11 des Stutzens 2 eingefügt.

An dem seitlich angeordneten Ausschleusungskanal 3 ist ein Endlosbehälter oder Endlosliner 12 angeordnet, der zur Ausschleusung von Behälterresten und/oder Einwegbefestigungsringen dient.

Im Verfahrensstadium der Fig. 2 ist das Werkzeug 4 in eine Dichtposition überführt worden. In der Dichtposition liegt ein Aufsatzabschnitt 13 des Werkzeugs 4 auf dem axialen Rand 10 des Endbereichs 11 des Stutzens auf und klemmt in diesem Randbereich den radial äußeren Umschlagsabschnitt 8 des Behälterrandes 7 zwischen dem Werkzeug, insbesondere zwischen dem Aufsatzabschnitt 13 und dem Rand des Endbereichs 11 des Stutzens 2 ein. Dabei kann eine zusätzlich am Rand 10 angeordnete Dichtung 29 als Dichtmittel zum Einsatz kommen, welche in der Dichtposition des Werkzeugs 4 die Abdichtung zwischen Stutzen 2 oder Rand 10 und dem Umschlagsabschnitt 8 des Behälterrandes 7 verbessert. In der Dichtposition des Werkzeugs 4 ist darüber hinaus mit einem Kontaktabschnitt 14 des Werkzeugs 4 der Einwegbefestigungsring 9 mitsamt dem Umschlagsabschnitt 8 des Behälterrandes 7 in einen Dichtabschnitt 15 des Stutzens eingepresst worden. Bevorzugt kann dabei vorgesehen sein, dass im Dichtabschnitt 15 des Stutzens 2 der Innendurchmesser geringer ausfällt als beispielsweise im Endbereich 11, sodass das Einpressen des Einwegbefestigungsringes 9 mithilfe des Kontaktabschnitts 14 des Werkzeugs 4 dazu führt, dass der Einwegbefestigungsring 9 radial verformt wird und bevorzugt gleichzeitig eine entgegengesetzte, insbesondere elastische, Anpresskraft auf den Umschlagsabschnitt 8 des Behälterrandes 7 ausübt und somit den Behälterrand 7 gegenüber dem Stutzen 2 abdichtet.

Die entsprechende Dichtung kann bei einer vorteilhaft gewählten Form des Einwegbefestigungsringes 9 jedoch auch ohne eine Verengung im Innendurchmesser des Stutzens, also auch ohne eine Verringerung des Innendurchmessers im Bereich des Dichtabschnitts 15, erzielt werden. Dazu kann beispielsweise ausschließlich eine Verformung, insbesondere radiale Stauchung des Einwegbefestigungsringes 9 vorgesehen sein. Besonders bevorzugt kann aber eine entsprechende Verringerung des Innendurchmessers sowohl das axiale Halten des Einwegbefestigungsringes 9 im Dichtabschnitt 15 als auch das radiale Anpressen des Umschlagsabschnitts 8 an den Stutzen 2 verbessern.

In der Fig. 2 ist also zu erkennen, dass eine doppelte Dichtung zwischen dem Stutzen 2 und dem Behälterrand 7 hergestellt wird. Einerseits durch die Klemmung des Einwegbefestigungsringes 9 im Dichtabschnitt des Stutzens 2 und andererseits durch den Aufsitzabschnitt 13 des Werkzeugs 4 auf dem Rand 10 des Stutzens 2, insbesondere im Endbereich 11 des Stutzens 2. Bei einer derartig vorteilhaften Dichtung kann ohne Weiteres der Verschluss 6 vom Behälter gelöst werden und, wie durch den Richtungspfeil R angezeigt, eine Entleerung des Behälters 5 durchgeführt werden.

Im Anschluss an die in der Fig. 2 dargestellte Entleerung des Behälters 5 kann ein Abtrennen des Behälters 5 von dem Behälterrand 7 unter beidseitigem Verschluss, insbesondere unter Verwendung eines Doppel-Clips, erreicht werden. Dabei kann zunächst mit einem Doppel-Clip umfassend die Clips 16.1 und 16.2 der Behälter 5 vom Behälterrand 7 getrennt und beide Enden versiegelt werden. In einem zweiten Versiegelungsakt, beispielsweise unter Verwendung eines Einfach-Clips 16.3 kann der vorher mit dem Aufsitzabschnitt 13 auf dem Rand 10 des Stutzens 2 gehaltene radial äußere Umschlagsabschnitt 8 nach innen geschlagen werden, insbesondere nachdem das Werkzeug 4 aus der Dichtposition in eine, beispielsweise in der Fig. 3 dargestellte, Freigabeposition überführt wurde. Damit wird durch die doppelte Versiegelung des Behälterrands 7 erreicht, dass der Einwegbefestigungsring 9, der sich nach wie vor im Dichtabschnitt 15 des Stutzens befindet, vollständig von dem abgetrennten Behälterrand 7 eingekapselt wird.

Der versiegelte und abgetrennte Behälter 5 kann nunmehr in einfacher Weise sicher und ohne Verunreinigung der Umwelt entsorgt werden. Hinsichtlich des Behälterrandes 7 sowie des darin eingeschlossenen oder eingekapselten Einwegbefestigungsring 9 wird auf die Darstellung der nachfolgenden Fig. 4 bis 7 verwiesen.

In der nachfolgenden Darstellung der Fig. 4 wird ein weiterer Behälter 5, beispielsweise in Form eines Big-Bags, in einem verschlossenen Zustand mit einem entsprechenden Behälterrand 7 von radial innen nach radial außen um einen weiteren Einwegbefestigungsring 9 umgeschlagen, wobei abermals der radial äußere Bereich des Umschlagsabschnitts 8 über den Rand 10 des Stutzens 2 im Endbereich 11 geführt oder umgekrempelt wird. In diesem Zustand wird der zweite oder nachfolgende Einwegbefestigungsring 9 in den Endbereich 11 des Stutzens 2 eingefügt, insbesondere eingelegt.

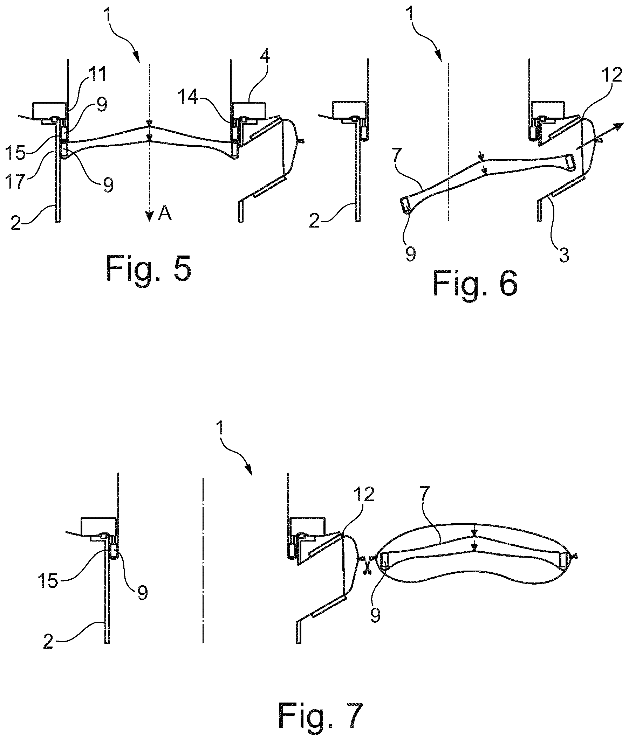

In Analogie zu den Fig. 1 und 2 wird in der Fig. 5 nunmehr das Werkzeug 4 aus der in der Fig. 4 dargestellten Freigabeposition in die in der Fig. 5 dargestellten Dichtposition überführt, wobei abermals der Kontaktabschnitt 14 oder die Kontaktabschnitte 14 des Werkzeugs 4 den Einwegbefestigungsring 9, in diesem Fall den nachfolgenden oder zweiten Einwegbefestigungsring 9, aus dem Endbereich 11 des Stutzens 2 in den Dichtabschnitt 15 des Stutzens 2 überführen. Dadurch erfolgt eine abermalige Abdichtung, insbesondere eine doppelte Abdichtung, des Behälterrandes 7 gegenüber dem Stutzen 2, sodass ein sicheres Entleeren des Behälters 5 gegeben ist. Durch die Verwendung des Einwegbefestigungsringes, der eine entsprechend zuverlässige Abdichtung bereitstellt, könnte jedoch auch die zweite Dichtung im Rahmen des Rands 10 des Stutzens 2 unterbleiben.

Wie in Fig. 5 weiter erkennbar, führt das Einpressen des zweiten Einwegbefestigungsringes 9 in den Dichtabschnitt 15 dazu, dass der erste oder vorangegangene Einwegbefestigungsring 9 in axialer Richtung weiter bewegt wird und dadurch mittelbar mit dem Werkzeug 4, und unmittelbar über den nachfolgenden Einwegbefestigungsring 9, in einen Entnahmeabschnitt 17 des Stutzens 2 überführt wird. Bevorzugt ist der Innendurchmesser des Stutzens 2 im Entnahmeabschnitt 17 geringfügig größer als im Dichtabschnitt 15.

Der Einwegbefestigungsring 9 des vorangehenden Behälterentladungsvorganges oder Behälterentleerungsvorganges kann, wie beispielsweise in Fig. 6 skizziert, samt des um den Einwegbefestigungsring 9 verbleibenden Behälterrandes 7 durch einen seitlich, in axialer Richtung dem Entnahmeabschnitt 17 des Stutzens 2 nachgeordnet angeordneten Ausschleusungskanal 3 entnommen und mit dem Endlosliner 12 abermals eingeschlossen oder umkapselt werden. Die Entnahme des Einwegbefestigungsringes 9 der vorangehenden Entleerung kann beispielsweise durch einen händischen Eingriff in den Ausschleusungskanal 3 erfolgen, wobei der Endlosliner 12 bereits als Schutz des Benutzers vor händischer Kontaktierung des Einwegbefestigungsringes 9 sowie des Behälterrandes 7 dient. Die in der Fig. 6 dargestellte Entnahme des Einwegbefestigungsringes 9 samt Behälterrand 7 aus dem Ausschleusungskanal 3 erfolgt bevorzugt vor oder während der Öffnung und/oder Entleerung des nachfolgenden Behälters 5, wie bereits in der Fig. 2 dargestellt.

In Fig. 7 ist abschließend gezeigt, wie der erste Einwegbefestigungsring 9 mitsamt des entsprechenden Behälterrandes 7 nochmals umhüllt oder eingekapselt wird und, vorteilhaft unter erneuter Verwendung eines Doppel-Clips 16.1, 16.2, von dem Endlosliner 12 getrennt wird. Der zweite oder nachfolgende Einwegbefestigungsring 9 befindet sich in diesem Verfahrensstadium nach wie vor im Dichtabschnitt 15 des Stutzens 2. Nach Entleerung des nachfolgenden Behälters 5, also im Anschluss an den Verfahrensschritt der Fig. 7, kann das Verfahren fortgesetzt werden, indem zur Abtrennung des Behälters 5 und zur Entladung eines nachfolgenden Behälters 5 die Verfahrensschritte gemäß Fig. 3 bis 7 wiederholt durchgeführt werden.

Anhand der vorangehenden Beschreibung der Vorrichtung sowie des entsprechenden Verfahrens der vorliegenden Erfindung wird deutlich, dass das Verfahren und die Vorrichtung sehr einfach ausgebildet und durchgeführt werden können, gleichzeitig aber ein besonders hohes Maß an Reinheit oder umgekehrt ein besonders niedriges Maß an Kontamination der Umgebung erlauben/verursachen. Im Vergleich dazu sind Vorrichtungen und Verfahren, die beispielsweise aufblasbare Dichtungen oder in sonstiger Weise verstell- oder veränderbare Dichtungen zur Abdichtung des Behälterrandes verwenden, hochgradig komplex und die damit verbundenen Verfahren gleichermaßen komplex.

Durch das einfache Verfahren und die einfache Ausgestaltung der Vorrichtung, wie in den vorangehenden Fig. 1 bis 7 beschrieben, wird die Fehleranfälligkeit und die Fehlerwahrscheinlichkeit erheblich reduziert. Außerdem ist durch die einfache Ausgestaltung der Vorrichtung eine sehr einfache Reinigung der Vorrichtung möglich. Dabei können durch die grundsätzlich unempfindlichen Oberflächen des Stutzens 2, der beispielsweise aus Edelstahl geformt sein kann, eine sehr breite oder unbegrenzte Anzahl an Reinigungsmitteln zum Einsatz kommen, was bei gattungsgemäßen Vorrichtungen mit einer entsprechend komplexen Struktur ebenfalls nicht möglich ist.

Wie beispielsweise in der Fig. 3 und der Fig. 4 zu erkennen, bildet der Behälterrand 7, nach seiner Abtrennung von dem Behälter 5, in Zusammenwirkung mit dem Einwegbefestigungsring 9 sowie dessen Klemmung im Dichtabschnitt 15 des Stutzens 2 eine doppelwandige Versiegelung des Stutzens 2, insbesondere jenseits des Endbereichs 11, aus. Dies bedeutet im Umkehrschluss aber auch, dass der Stutzen 2, abgesehen von einer möglichen Erstverbindung mit einem Behälter 5 oder Behälterrand 7 durchgehend verschlossen und versiegelt ist, sodass gerade auch zwischen den Befüllvorgängen oder Entleervorgängen keine Verunreinigungen in das Innere des Stutzens 2 eindringen können. Gleichermaßen können auch keine Material- oder Stoffrückstände, insbesondere Pulverrückstände, aus dem Inneren des Stutzens 2 in die Umgebung gelangen. Die doppelwandige Versiegelung auf der Grundlage des Behälterrandes 7 nach Abtrennung des Behälters 5 ist dabei in überraschender Weise so stabil ausgebildet, dass im Inneren des Stutzens 2 sogar ein Überdruck aufrechterhalten werden kann. Beispielsweise kann bis 0,5 bar Überdruck erzeugt und aufrechterhalten werden, ohne dass merklich der Überdruck aus dem Stutzen 2 entweicht.

Weiterhin ist besonders vorteilhaft an der Vorrichtung und dem Verfahren gemäß der Fig. 1 bis 7, dass die Verbindung zwischen den Behältern 5 und der Vorrichtung 1, insbesondere dem Stutzen 2, besonders schnell und einfach hergestellt werden kann. Davon profitiert auch die gesamte Verfahrensdauer zur Befüllung und/oder Entleerung von Behältern.

In den Fig. 1 bis 7 wurde die Vorrichtung und das Verfahren in Form einer Entleerung beschrieben. Die identischen Vorrichtungsmerkmale und auch weitestgehend identische Verfahrensschritte können jedoch auch zum Einsatz kommen, wenn ein Befüllungsvorgang durchgeführt werden soll. Dazu ist lediglich die Vorrichtung um 180° zu drehen, beispielsweise wenn der Stoff oder das Pulver durch Schwerkraft in den Behälter 5 gefüllt werden soll. Ein weiterer Unterschied dabei ist selbstredend, dass der Übergang zwischen Behälter 5 und Behälterrand 7 zunächst nicht mit einem Verschluss 6 verschlossen ist, sondern vielmehr offen ist und erst nach der Befüllung der Behälter 5 vom Behälterrand 7 abgetrennt und beidseitig versiegelt wird. Gegebenenfalls kann die Vorrichtung auch sowohl für Befüllvorgänge als auch für Entleervorgänge genutzt werden, was ebenfalls durch die einfache Struktur erleichtert wird.

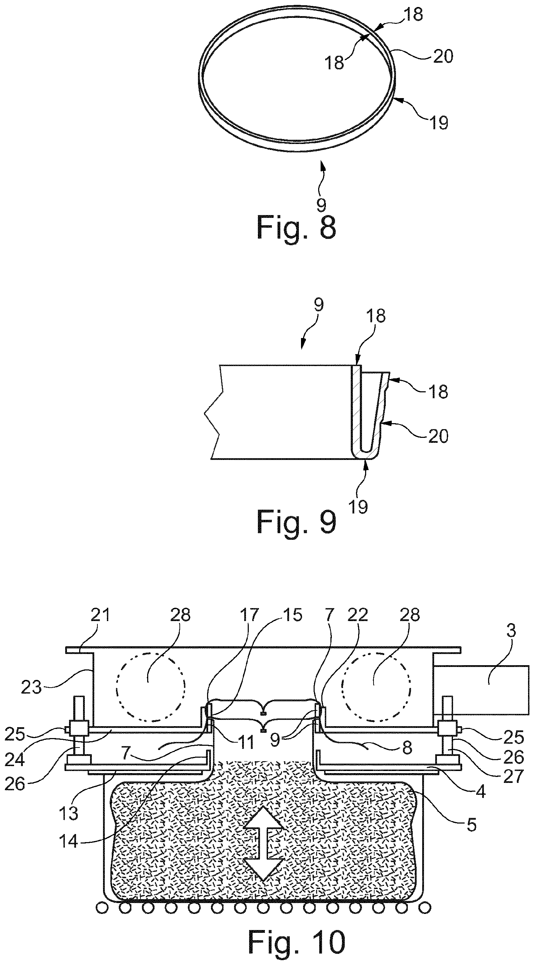

Die Fig. 8 zeigt eine schematische Darstellung eines Einwegbefestigungsringes 9. Dieser weist zwei Schenkel 18 auf, welche winklig, insbesondere spitzwinklig, miteinander verbunden sind. Der Einwegbefestigungsring 9 kann beispielsweise aus Polymermaterial, insbesondere Polyamid oder Polyurethan gefertigt sein. Der Einwegbefestigungsring 9 weist auf einer radial äußeren Oberfläche 19, insbesondere auf dem radial äußeren Schenkel 18, eine Oberflächenprofilierung 20 auf, die die Dichtwirkung des Einwegbefestigungsringes 9 weiter verbessert.

Die Ausgestaltung des Einwegbefestigungsrings 9 geht auch aus der Schnittdarstellung der Fig. 9 nochmals hervor. Dabei ist zu erkennen, dass die beiden Schenkel 18 im Wesentlichen eine U-Form ausbilden mit einem entsprechenden Übergangsbereich 19. Der radial äußere Schenkel 18 weist dabei nach radial außen die Profilierung 20 auf.

Die Fig. 10 zeigt eine alternative Ausführungsform der Vorrichtung, die beispielsweise zum Einsatz kommen kann, um die Vorrichtung beispielsweise mit einem Isolator zu verbinden und damit die Behälter in den Isolator zu entleeren oder aus dem Isolator zu befüllen. Im Beispiel der Fig. 10 ist eine Variante gezeigt, in der die Vorrichtung 1 unter einem Isolator angeordnet werden kann. Dazu weist die Vorrichtung einen Stutzen 2 auf, der an einem axialen Ende mit einem als Flansch ausgebildeten Verbindungsmittel 21 versehen ist, um eine dichte Anbindung mit dem nicht dargestellten Isolator herzustellen. Die Verbindungsmittel 21 können über eine zusätzliche Dichtung verfügen, um eine dichte Anbindung an einen Isolator oder eine vergleichbare Vorrichtung zu ermöglichen.

Der Stutzen 2 weicht insofern von der schematischen Darstellung der Fig. 1 bis Fig. 7 ab, als dass der Endbereich 11, der Dichtabschnitt 15 und der Entnahmeabschnitt 17 in einem inneren Stutzenabschnitt 22 angeordnet sind, wobei der innere Stutzenabschnitt 22 in einem äußeren Stutzenabschnitt 23 und koaxial mit diesem äußeren Stutzenabschnitt 23 verläuft und über eine Abschlussplatte 24 mit dem äußeren Stutzenabschnitt 23 verbunden ist, insbesondere stoffschlüssig verbunden ist. Demnach weist der innere Stutzenabschnitt 22 gegenüber dem äußeren Stutzenabschnitt einen verringerten Querschnitt oder Innendurchmesser auf.

Der Ausschleusungskanal 3 ist hingegen in dem äußeren Stutzenabschnitt angeordnet oder mit dem Stutzen 2 verbunden, was eine einfachere Handhabung der auszuschleusenden Einwegbefestigungsringe ermöglicht, da mehr Platz zu deren Handhabung zur Verfügung steht. Ansonsten ist die Funktionsweise der Vorrichtung 1, insbesondere die Funktion oder das Zusammenspiel von Behälter 5, Einwegbefestigungsring 9 und Stutzen 2, identisch zu der Ausführungsform der Fig. 1 bis Fig. 7. Beispielsweise ist ersichtlich, dass ein im Dichtabschnitt 15 befindlicher Einwegbefestigungsring 9 samt dem abgetrennten Behälterand eine doppelwandige Versiegelung des Stutzen gewährleistet, auch weil der Einwegbefestigungsring im Dichtabschnitt 15 eine Anpressung des Behälters oder Behälterrandes an den Stutzen sicherstellt.

An der Abschlussplatte 24 ist zumindest abschnittsweise ein Vorsprung 25 vorgesehen, welcher zur Abstützung und/oder zur Durchführung einer Führung 26 des Werkzeugs 4 dient. Die Führung ist beispielsweise an zwei diametral gegenüberliegenden Seiten des Stutzens 2 angeordnet und weist auf jeder Seite einen Stab 27 oder mehrere Stäbe 17 auf. Die Führung 26 des Werkzeugs 4 kann ihrerseits mit einem Antrieb verbunden sein, der in der Skizze der Fig. 10 nicht dargestellt ist. Die Führung 26 und der Antrieb können jedoch auch ohne eine Durchführung oder Abstützung in dem oder den Vorsprüngen 25 zum Einsatz kommen. Beispielsweise kann der Antrieb oder können die Antriebe seitlich am Stutzen 2, insbesondere auf einer Außenoberfläche angeordnet und befestigt werden. Die Führung(en) 26 und/oder der oder die Antriebe können auch bei der Ausführungsform der Fig. 1 bis Fig. 7 zum Einsatz kommen.

Über den Antrieb und die Führung 26 wird das Werkzeug 4 zwischen Freigabeposition und Dichtposition bewegt. In der Figur 10 ist das Werkzeug 4 in einer Freigabeposition angeordnet. Wie bereits in den Fig. 1 bis Fig. 7 beschrieben kann der Kontaktabschnitt 14 des Werkzeugs 4 die Überführung der Einwegbefestigungsringe 9 von dem Endbereich 11 des Stutzens 2 im inneren Stutzenabschnitt 22 in den Dichtabschnitt 15 unmittelbar und die Überführung der Einwegbefestigungsringe 9 aus dem Dichtabschnitt 15 in den Entnahmeabschnitt 17 mittelbar über einen weiteren Einwegbefestigungsring 9 bewirken, indem das Werkzeug 4 aus der Freigabeposition in die Dichtposition überführt wird. Bei Erreichen der Dichtposition liegt dabei der Aufsitzabschnitt 13 des Werkzeugs 4 auf dem Rand 10, insbesondere auch auf der Abschlussplatte 24 des Stutzens 2 auf und kann im Bereich der Abschlussplatte mit einer nicht näher dargestellten Dichteinrichtung den Behälterrand 7 zusätzlich zu dessen Abdichtung im Dichtabschnitt 15 des Stutzen 2 abdichten.

Im Beispiel der Fig. 10 ist zudem erkennbar dass in axialer Richtung etwa auf der Höhe des Ausschleusungskanals 3 zwei Handschuh-Eingriffsvorrichtung 28 vorgesehen sind, mit denen ein von außen geschützter händischer Zugriff in das Innere des Stutzen 2 möglich ist, beispielsweise um einen im Entnahmeabschnitt 17 befindlichen Einwegbefestigungsring 9 zu entnehmen.

Unterhalb der Vorrichtung gemäß Fig. 10 oder oberhalb der Vorrichtung 1 gemäß Fig. 1 bis Fig. 7 kann eine Stützvorrichtung angeordnet sein, welche die zu befüllenden oder zu entleerenden Behälter aufnehmen und stützen kann. Die Stützvorrichtung kann als ein Käfig, beispielsweise als Stangenkäfig ausgebildet sein.

Alternativ zu der Ausführungsform der Fig. 10 kann eine Vorrichtung die im Wesentlichen der Darstellung der Fig. 1 bis Fig. 7 entspricht auch mit einer weiteren Vorrichtung kombiniert werden, die dann die Handschuh-Eingriffsvorrichtung und/oder den Ausschleusungskanal bereitstellt. Also eine solche Vorrichtung kommt beispielsweise in Isolator in Frage. Die kombinierte Vorrichtung ist ebenfalls Gegenstand der Erfindung.

### Bezugszeichenliste

- 1: Befüllungs- und/oder Entleerungsvorrichtung
- 2: Befüll- und/oder Entleerstutzen
- 3: Ausschleusungskanal
- 4: Werkzeug
- 5: Behälter
- 6: Verschluss
- 7: Behälterrand
- 8: Umschlagsabschnitt
- 9: Einwegbefestigungsring
- 10: Rand des Stutzens
- 11: Endbereich des Stutzens
- 12: Endlosbehälter/Endlosliner
- 13: Aufsatzabschnitt
- 14: Kontaktabschnitt des Werkzeugs
- 15: Dichtabschnitt des Stutzens
- 16.1: Doppel-Clip
- 16.2: Doppel-Clip
- 16.3: Einfach-Clip
- 17: Entnahmeabschnitt des Stutzens
- 18: Schenkel
- 19: Übergangsbereich
- 20: Oberflächenprofilierung
- 21: Verbindungsmittel
- 22: innerer Stutzenabschnitt
- 23: äußerer Stutzenabschnitt
- 24: Abschlussplatte
- 25: Vorsprung
- 26: Führung
- 27: Stab/Stäbe
- 28: Handschuh-Eingriffsvorrichtung
- 29: Dichtung

- A: axiale Richtung
- R: Richtungspfeil

## Patentansprüche

1. Verfahren zur Befüllung und/oder Entleerung von flexiblen Behältern (5), insbesondere Säcken, mit, insbesondere gefährlichen, losen Stoffen, bevorzugt in Pulverform **gekennzeichnet durch** die Verfahrensschritte:
- Umschlagen eines Behälterrandes (7) um einen radial verformbaren Einwegbefestigungsring (9), insbesondere von radial innen nach außen;
- Einfügen, insbesondere händisches Einfügen, des Einwegbefestigungsrings (9) in einen Endbereich eines Befüll- und/oder Entleerstutzen (2) einer Befüll- und/oder Entleerungsvorrichtung (1), so dass der Einwegbefestigungsring (9) im wesentlichen konzentrisch zum Befüll- und/oder Entleerstutzen (2) angeordnet ist und ein radial äußerer Umschlagsabschnitt (8) des Behälterrandes (7) zwischen einer Innenoberfläche des Befüll- und/oder Entleerstutzen (2) und einer radial äußeren Oberfläche des Einwegbefestigungsrings (9) angeordnet und/oder geklemmt wird;
- Einpressen, insbesondere mechanisches Einpressen, des Einwegbefestigungsringes (9) in einen Dichtabschnitt (15) des Befüll- und/oder Entleerstutzens (2), der dem Endbereich in axialer Richtung (A) nachgeordnet ist und bevorzugt einen geringeren Innendurchmesser aufweist als der Endbereich, wobei das Einpressen des Einwegbefestigungsringes (9) in das Innere des Befüll- und/oder Entleerstutzen (2) zu einer radialen Verformung und einer entgegengesetzten Anpresskraft, insbesondere elastischen Rückstellkraft, führt, welche den radial äußeren Umschlagsabschnitt (8) des Behälterrandes (7) gegen die Innenoberfläche des Befüll- und/oder Entleerstutzen (2) presst, wobei der radial äußere Umschlagsabschnitt (8) des Behälterrandes (7) gegen den Dichtabschnitt (15) des Befüll- und/oder Entleerstutzens (2) gepresst wird und dabei den Behälter (5) gegenüber dem Befüll- und/oder Entleerstutzen (2) abdichtet;
- Befüllen oder Entleeren des Behälters (5) durch Zugabe oder Abführung des Stoffes durch den Befüll- und/oder Entleerstutzen (2);
- Versiegeln und Abtrennen des befüllten oder entleerten Behälters (5);
- Versiegeln des Umschlagabschnitts, wobei bevorzugt der Einwegbefestigungsring (9) vollständig vom Umschlagabschnitt umschlossen wird.

2. Verfahren nach Anspruch 1,
**dadurch gekennzeichnet,**
**dass** durch das Einpressen eines nachfolgenden Einwegbefestigungsringes (9) ein im Dichtabschnitt (15) befindlicher, insbesondere versiegelter, Einwegbefestigungsring (9) in einen axial dem Dichtabschnitt (15) nachgeordneten Entnahmeabschnitt (17) des Befüll- und/oder Entleerstutzen (2) überführt wird, wobei der Entnahmeabschnitt (17) bevorzugt einen gegenüber dem Dichtabschnitt (15) vergrößerten Innendurchmesser aufweist.

3. Verfahren nach Anspruch 2,
**dadurch gekennzeichnet,**
**dass** ein im Entnahmeabschnitt (17) des Befüll- oder Entleerstutzen (2) befindlicher, insbesondere versiegelter, Einwegbefestigungsring (9) durch einen, bevorzugt axial dem Entnahmeabschnitt (17) nachgeordneten, in den Befüll- und/oder Entleerstutzen (2) mündenden Ausschleusungskanal (3), insbesondere händisch, entnommen wird.

4. Verfahren nach einem der Ansprüche 2 oder 3,
**dadurch gekennzeichnet,**
**dass** bei der Entnahme des Einwegbefestigungsrings (9) eine, insbesondere weitere, Einkapselung des Einwegbefestigungsrings (9) und des Umschlagabschnitts (8) hergestellt wird.

5. Verfahren nach einem der Ansprüche 1 bis 4,
**dadurch gekennzeichnet,**
**dass** der Einwegbefestigungsring (9) im Dichtabschnitt (15) axial gehalten und/oder radial an den Dichtabschnitt (15) angepresst wird, bevorzugt mit einem Werkzeug (4), welches auch das Einpressen in den Dichtabschnitt (15) bewerkstelligt hat.

6. Befüllungs- und/oder Entleerungsvorrichtung (1) zum Befüllen und/oder Entleeren von flexiblen Behältern (5), insbesondere Säcken, mit, insbesondere gefährlichen, losen Stoffen, bevorzugt in Pulverform, umfassend einen Befüll- und/oder Entleerstutzen (2) mit einem offenen Endbereich und
**gekennzeichnet durch**
zumindest einem verformbaren Einwegbefestigungsring (9), wobei der Einwegbefestigungsring (9) im Verhältnis zum Innendurchmesser des Befüll- und/oder Entleerstutzen (2) so ausgebildet ist, dass nach einem Umschlagen eines Behälterrandes (7) um den Befestigungsring, bevorzugt von radial innen nach außen, ein Einfügen, insbesondere händisches Einfügen, des Einwegbefestigungsrings (9) in einen Endbereich des Befüll- und/oder Entleerstutzen (2) ermöglicht wird, so dass der Einwegbefestigungsring (9) im wesentlichen konzentrisch zum Befüll- und/oder Entleerstutzen (2) angeordnet ist und ein radial äußerer Umschlagsabschnitt (8) des Behälterrandes (7) zwischen einer Innenoberfläche des Befüll- und/oder Entleerstutzen (2) und einer radial äußeren Oberfläche des Einwegbefestigungsrings (9) angeordnet und/oder geklemmt wird und zudem der Einwegbefestigungsring (9) im Verhältnis zum Innendurchmesser des Befüll- und/oder Entleerstutzen (2) so ausgebildet ist, dass ein Einpressen, insbesondere mechanisches Einpressen, des Einwegbefestigungsringes (9) in einen Dichtabschnitt (15) des Befüll- und/oder Entleerstutzens (2), der dem Endbereich in axialer Richtung (A) nachgeordnet ist und bevorzugt einen geringeren Innendurchmesser aufweist als der Endbereich, möglich ist, wobei der Einwegbefestigungsring (9) eine, bevorzugt elastische, Verformbarkeit in radialer Richtung erfährt, so dass das Einpressen in das Innere des Befüll- und/oder Entleerstutzen (2) zu einer radialen Verformung und einer entgegengesetzten Anpresskraft, bevorzugt einer elastischen Rückstellkraft, führt, welche den radial äußeren Umschlagsabschnitt (8) des Behälterrandes (7) gegen die Innenoberfläche des Befüll- und/oder Entleerstutzen (2) presst und dabei den Behälter (5) gegenüber dem Befüll- und/oder Entleerstutzen (2) abdichtet.

7. Befüllungs- und/oder Entleerungsvorrichtung (1) nach Anspruch 6, **dadurch gekennzeichnet,**
**dass** der Befüll- und/oder Entleerstutzen (2) einen axial dem Dichtabschnitt (15) nachgeordneten Entnahmeabschnitt (17) aufweist, wobei der Entnahmeabschnitt (17) bevorzugt einen gegenüber dem Dichtabschnitt (15) vergrößerten Innendurchmesser aufweist, wobei weiter bevorzugt der Entnahmeabschnitt (17) so gegenüber dem Dichtabschnitt (15) ausgebildet ist, dass das Einpressen eines nachfolgenden Einwegbefestigungsringes (9) einen im Dichtabschnitt (15) befindlichen, insbesondere versiegelten, Einwegbefestigungsring (9) in einen Entnahmeabschnitt (17) überführt.

8. Befüllungs- und/oder Entleerungsvorrichtung (1) nach Anspruch 6 oder 7,
**gekennzeichnet durch**
einen, bevorzugt axial dem Entnahmeabschnitt (17) nachgeordneten, in den Befüll- und/oder Entleerstutzen (2) mündenden Ausschleusungskanal (3), der so bezüglich des Entnahmeabschnitts (17) angeordnet ist, dass ein im Entnahmeabschnitt (17) des Befüll- und/oder Entleerstutzen (2) befindlicher, insbesondere versiegelter, Einwegbefestigungsring (9) durch den Ausschleusungskanal (3), insbesondere händisch, entnommen werden kann.

9. Befüllungs- und/oder Entleerungsvorrichtung (1) nach einem der Ansprüche 6 bis 8,
**gekennzeichnet durch**
ein Werkzeug (4) zum Überführen des Einwegbefestigungsrings (9) vom Endbereich in den Dichtabschnitt (15), wozu das Werkzeug (4) in axialer Richtung (A) aus einer Freigabeposition in eine Dichtposition axial verstellbar ist.

10. Befüllungs- und/oder Entleerungsvorrichtung (1) nach Anspruch 9,
**dadurch gekennzeichnet,**
**dass** das Werkzeug (4) einen Kontaktabschnitt (14) aufweist, mit dem der Einwegbefestigungsring (9) in der Dichtposition des Werkzeugs (4), axial im Dichtabschnitt (15) gehalten und/oder radial an den Dichtabschnitt (15) angepresst wird.

11. Befüllungs- und/oder Entleerungsvorrichtung (1) nach einem der Ansprüche 9 oder 10,
**dadurch gekennzeichnet,**
**dass** das Werkzeug (4) einen Aufsatzabschnitt (13) aufweist, der in der Dichtposition des Werkzeugs (4) auf einem axialen Rand (10) des Endbereichs des Befüll- und/oder Entleerstutzen (2) aufsitzt.

12. Befüllungs- und/oder Entleerungsvorrichtung (1) nach einem der Ansprüche 6 bis 11,
**dadurch gekennzeichnet,**
**dass** der Einwegbefestigungsring (9) aus einem Polymermaterial, insbesondere aus Polyamid oder Polyurethan, gefertigt ist.

13. Befüllungs- und/oder Entleerungsvorrichtung (1) nach einem der Ansprüche 6 bis 12,
**dadurch gekennzeichnet,**
**dass** der Einwegbefestigungsring (9) ein Querschnitts-Profil mit zumindest zwei winklig miteinander verbundenen Schenkeln (18) aufweist.

14. Befüllungs- und/oder Entleerungsvorrichtung (1) nach nach einem der Ansprüche 6 bis 13,
**dadurch gekennzeichnet,**
**dass** der Einwegbefestigungsring (9) auf einer radial äußeren Oberfläche, bevorzugt auf einem radial äußeren Schenkel (18), eine Oberflächenprofilierung (20) aufweist.

15. Befüllungs- und/oder Entleerungsvorrichtung (1) nach nach einem der Ansprüche 6 bis 14,
**dadurch gekennzeichnet,**
**dass** der Innendurchmesser des Endbereichs 0,2% - 1,5% größer ist als der Innendurchmesser des Dichtabschnitts (15).

16. Befüllungs- und/oder Entleerungsvorrichtung (1) nach nach einem der Ansprüche 6 bis 15,
**dadurch gekennzeichnet,**
**dass** der Innendurchmesser des Entnahmeabschnitts (17) 0,2% - 1,5% größer ist als der Innendurchmesser des Dichtabschnitts (15).

17. Befüllungs- und/oder Entleerungsvorrichtung (1) nach nach einem der Ansprüche 6 bis 16,
**dadurch gekennzeichnet,**
**dass** der Dichtabschnitt (15) durch eine, bevorzugt von außen in den Befüll- und/oder Entleerstutzen (2) eingebrachte, Sicke ausgebildet wird.

## Claims

1. A method for filling and/or emptying flexible containers (5), in particular bags, of, in particular hazardous, loose substances, preferably in powder form, the method being **characterized by** the method steps of:
- folding a container edge (7) over a radially deformable, disposable fastening ring (9), in particular from the radial inside to the outside;
- inserting, in particular manually inserting, the disposable fastening ring (9) into an end portion of a filling and/or emptying neck (2) of a filling and/or emptying device (1), the disposable fastening ring (9) thus being arranged substantially concentrically with the filling and/or emptying neck (2) and a radially outer fold-over section (8) of the container edge (7) being arranged and/or clamped between an inner surface of the filling and/or emptying neck (2) and a radially outer surface of the disposable fastening ring (9);
- pressing, in particular mechanically pressing, the disposable fastening ring (9) into a sealing section (15) of the filling and/or emptying neck (2) disposed downstream of the end portion in the axial direction (A) and preferably having a smaller inner diameter than the end portion, the pressing of the disposable fastening ring (9) into the inside of the filling and/or emptying neck (2) leading to a radial deformation and to an opposite contact force, in particular an elastic restoring force, which presses the radially outer fold-over section (8) of the container edge (7) against the inner surface of the filling and/or emptying neck (2), wherein the radially outer fold-over section (8) of the container edge (7) is pressed against the sealing section (15) of the filling and/or emptying neck (2) and seals the container (5) against the filling and/or emptying neck (2) in the process;
- filling or emptying the container (5) by adding or discharging the substance through the filling and/or emptying neck (2);
- sealing and detaching the filled or emptied container (5);
- sealing the fold-over section, the disposable fastening ring (9) preferably being completely enclosed by the fold-over section.

2. The method according to claim 1,
**characterized in that**,
as a result of the pressing in of a subsequent disposable fastening ring (9), a disposable fastening ring (9) located, in particular sealed, in the sealing section (15) is transferred into a removal section (17) of the filling and/or emptying neck (2), the removal section (17) being disposed axially downstream of the sealing section (15) and preferably having a larger inner diameter compared to the sealing section (15).

3. The method according to claim 2,
**characterized in that**
a disposable fastening ring (9) located, in particular sealed, in the removal section (17) of the filling or emptying neck (2) is removed, in particular manually, through a discharge channel (3) which is preferably disposed axially downstream of the removal section (17) and which opens into the filling and/or emptying neck (2).

4. The method according to claim 2 or 3,
**characterized in that**
an, in particular additional, encapsulation of the disposable fastening ring (9) and the fold-over section (8) is created when the disposable fastening ring (9) is removed.

5. The method according to any one of claims 1 to 4,
**characterized in that**
the disposable fastening ring (9) is axially held in the sealing section (15) and/or is radially pressed against the sealing section (15), preferably by means of a tool (4) which has also carried out the pressing into the sealing section (15).

6. A filling and/or emptying device (1) for filling and/or emptying flexible containers (5), in particular bags, of, in particular hazardous, loose substances, preferably in powder form, the filling and/or emptying device (1) comprising a filling and/or emptying neck (2) having an open end portion and being
**characterized by**
at least one deformable disposable fastening ring (9), the disposable fastening ring (9) being realized in such a manner in relation to the inner diameter of the filling and/or emptying neck (2) that an insertion, in particular a manual insertion, of the disposable fastening ring (9) into an end portion of the filling and/or emptying neck (2) is enabled after a container edge (7) has been folded over the fastening ring, preferably from the radial inside to the outside, the disposable fastening ring (9) thus being arranged substantially concentrically with the filling and/or emptying neck (2) and a radially outer fold-over section (8) of the container edge (7) being arranged and/or clamped between an inner surface of the filling and/or emptying neck (2) and a radially outer surface of the disposable fastening ring (9) and the disposable fastening ring (9) being additionally realized in such a manner in relation to the inner diameter of the filling and/or emptying neck (2) that the disposable fastening ring (9) can be pressed, in particular mechanically pressed, into a sealing section (15) of the filling and/or emptying neck (2) which is disposed downstream of the end portion in the axial direction (A) and which preferably has a smaller inner diameter than the end portion, the disposable fastening ring (9) being, preferably elastically, deformable in the radial direction, the pressing into the inside of the filling and/or emptying neck (2) thus leading to a radial deformation and an opposite contact force, preferably an elastic restoring force, which presses the radially outer fold-over section (8) of the container edge (7) against the inner surface of the filling and/or emptying neck (2) and seals the container (5) against the filling and/or emptying neck (2) in the process.

7. The filling and/or emptying device (1) according to claim 6,
**characterized in that**
the filling and/or emptying neck (2) has a removal section (17) which is disposed axially downstream of the sealing section (15), the removal section (17) preferably having a larger inner diameter compared to the sealing section (15), the removal section (17) further preferably being realized in such a manner in relation to the sealing section (15) that the pressing in of a subsequent disposable fastening ring (9) transfers a disposable fastening ring (9) located, in particular sealed, in the sealing section (15) into a removal section (17).

8. The filling and/or emptying device (1) according to claim 6 or 7,
**characterized by**
a discharge channel (3) which is preferably disposed axially downstream of the removal section (17) and which opens into the filling and/or emptying neck (2) and which is disposed in such a manner in relation to the removal section (17) that a disposable fastening ring (9) located, in particular sealed, in the removal section (17) of the filling and/or emptying neck (2) can be removed, in particular manually, through the discharge channel (3).

9. The filling and/or emptying device (1) according to any one of claims 6 to 8,
**characterized by**
a tool (4) for transferring the disposable fastening ring (9) from the end portion into the sealing section (15), for which purpose the tool (4) is axially displaceable from an open position into a sealing position in the axial direction (A).

10. The filling and/or emptying device (1) according to claim 9,
**characterized in that**
the tool (4) has a contact section (14) by means of which the disposable fastening ring (9) is axially held in the sealing section (15) and/or radially pressed against the sealing section (15) in the sealing position of the tool (4).

11. The filling and/or emptying device (1) according to claim 9 or 10,
**characterized in that**
the tool (4) has a resting section (13) which rests on an axial edge (10) of the end portion of the filling and/or emptying neck (2) in the sealing position of the tool (4).

12. The filling and/or emptying device (1) according to any one of claims 6 to 11,
**characterized in that**
the disposable fastening ring (9) is made of polymer material, in particular of polyamide or polyurethane.

13. The filling and/or emptying device (1) according to any one of claims 6 to 12,
**characterized in that**
the disposable fastening ring (9) has a cross section profile which has at least two legs (18) which are connected to one another at an angle.

14. The filling and/or emptying device (1) according to any one of claims 6 to 13,
**characterized in that**
the disposable fastening ring (9) has a surface profile (20) on a radially outer surface, preferably on a radially outer leg (18).

15. The filling and/or emptying device (1) according to any one of claims 6 to 14,
**characterized in that**
the inner diameter of the end portion is 0.2 % to 1.5 % larger than the inner diameter of the sealing section (15).

16. The filling and/or emptying device (1) according to any one of claims 6 to 15,
**characterized in that**
the inner diameter of the removal section (17) is 0.2 % to 1.5 % larger than the inner diameter of the sealing section (15).

17. The filling and/or emptying device (1) according to any one of claims 6 to 16,
**characterized in that**
the sealing section (15) is realized by a bead which is preferably introduced from outside into the filling and/or emptying neck (2).

## Revendications

1. Procédé de remplissage et/ou de vidange de récipients (5) souples, notamment de sacs, de substances en vrac, notamment dangereuses, de préférence en poudre, le procédé étant **caractérisé par** les étapes consistant à :
- replier, notamment de l'intérieur radial vers l'extérieur, un bord de récipient (7) autour d'une bague de fixation jetable (9) et déformable dans le sens radial ;
- insérer, notamment manuellement, la bague de fixation jetable (9) dans une zone d'extrémité d'une tubulure de remplissage et/ou de vidange (2) d'un dispositif de remplissage et/ou de vidange (1), de sorte que la bague de fixation jetable (9) est essentiellement concentrique par rapport à la tubulure de remplissage et/ou de vidange (2) et une partie repliée (8) radialement extérieure du bord de récipient (7) est disposée et/ou serrée entre une surface intérieure de la tubulure de remplissage et/ou de vidange (2) et une surface radialement extérieure de la bague de fixation jetable (9) ;
- insérer par pression, notamment mécaniquement, la bague de fixation jetable (9) dans une partie d'étanchéité (15) de la tubulure de remplissage et/ou de vidange (2) qui est disposée en aval de la zone d'extrémité dans la direction axiale (A) et qui a, de préférence, un diamètre intérieur qui est inférieur au diamètre intérieur de la zone d'extrémité, l'insertion par pression de la bague de fixation jetable (9) dans l'intérieur de la tubulure de remplissage et/ou de vidange (2) entrainant une déformation radiale et une force de contact opposée, notamment une force de rappel élastique, qui presse la partie repliée (8) radialement extérieure du bord de récipient (7) contre la surface intérieure de la tubulure de remplissage et/ou de vidange (2), la partie repliée (8) radialement extérieure du bord de récipient (7) étant pressée contre la partie d'étanchéité (15) de la tubulure de remplissage et/ou de vidange (2) et ainsi étanchéifiant le récipient (5) par rapport à la tubulure de remplissage et/ou de vidange (2) ;
- remplier ou vider le récipient (5) par l'ajout ou l'évacuation de la substance à travers la tubulure de remplissage et/ou de vidange (2) ;
- sceller et séparer le récipient rempli ou vidé ;
- sceller la partie repliée, la bague de fixation jetable (9) étant de préférence complètement entourée par la partie repliée.

2. Procédé selon la revendication 1,
**caractérisé en ce**
**qu'**une bague de fixation jetable (9) qui est logée, notamment scellée, dans la partie d'étanchéité (15) est transférée dans une partie de prélèvement (17) de la tubulure de remplissage et/ou de vidange (2) par l'insertion par pression d'une bague de fixation jetable (9) suivante, la partie de prélèvement (17) étant disposée en aval de la partie d'étanchéité (15) dans la direction axiale et ayant, de préférence, un diamètre intérieur agrandi par rapport à la partie d'étanchéité (15).

3. Procédé selon la revendication 2,
**caractérisé en ce**
**qu'**une bague de fixation jetable (9) qui est logée, notamment scellée, dans la partie de prélèvement (17) de la tubulure de remplissage ou de vidange (2) est enlevée, notamment manuellement, par un canal d'évacuation (3) qui est, de préférence, disposé en aval de la partie de prélèvement (17) dans la direction axiale et qui débouche dans la tubulure de remplissage et/ou de vidange (2).

4. Procédé selon la revendication 2 ou la revendication 3,
**caractérisé en ce**
**qu'**une encapsulation, notamment supplémentaire, de la bague de fixation jetable (9) et de la partie repliée (8) est réalisée lors du prélèvement de la bague de fixation jetable (9).

5. Procédé selon l'une quelconque des revendications 1 à 4,
**caractérisé en ce que**
la bague de fixation jetable (9) est maintenue axialement dans la partie d'étanchéité (15) et/ou pressée radialement contre la partie d'étanchéité (15), de préférence au moyen d'un outil (4) qui a également effectué l'insertion par pression dans la partie d'étanchéité (15).

6. Dispositif de remplissage et/ou de vidange (1) pour remplir et/ou vider des récipients (5) souples, notamment de sacs, de substances en vrac, notamment dangereuses, de préférence en poudre, le dispositif de remplissage et/ou de vidange (1) comprenant une tubulure de remplissage et/ou de vidange (2) qui a une zone d'extrémité ouverte et étant
**caractérisé par**
au moins une bague de fixation jetable (9) et déformable, la bague de fixation jetable (9) étant réalisée de telle manière par rapport au diamètre intérieur de la tubulure de remplissage et/ou de vidange (2) qu'un repliage d'un bord de récipient (7) autour d'une bague de fixation, de préférence de l'intérieur radial vers l'extérieur, permet d'insérer, notamment manuellement, la bague de fixation jetable (9) dans une zone d'extrémité de la tubulure de remplissage et/ou de vidange (2), de sorte que la bague de fixation jetable (9) est essentiellement concentrique par rapport à la tubulure de remplissage et/ou de vidange (2) et qu'une partie repliée (8) radialement extérieure du bord de récipient (7) est disposée et/ou serrée entre une surface intérieure de la tubulure de remplissage et/ou de vidange (2) et une surface radialement extérieure de la bague de fixation jetable (9) et que la bague de fixation jetable (9) est également réalisée de telle manière par rapport au diamètre intérieur de la tubulure de remplissage et/ou de vidange (2) que la bague de fixation jetable (9) peut être inséré par pression, notamment mécaniquement, dans une partie d'étanchéité (15) de la tubulure de remplissage et/ou de vidange (2) qui est disposée en aval de la zone d'extrémité dans la direction axiale (A) et qui a, de préférence, un diamètre intérieur qui est inférieur au diamètre intérieur de la zone d'extrémité, la bague de fixation jetable (9) étant déformée, de préférence élastiquement, dans la direction radiale, de sorte que l'insertion par pression dans l'intérieur de la tubulure de remplissage et/ou de vidange (2) entraine une déformation radiale et une force de contact opposée, de préférence une force de rappel élastique, qui presse la partie repliée (8) radialement extérieure du bord de récipient (7) contre la surface intérieure de la tubulure de remplissage et/ou de vidange (2) et ainsi étanchéifie le récipient (5) par rapport à la tubulure de remplissage et/ou de vidange (2).

7. Dispositif de remplissage et/ou de vidange (1) selon la revendication 6,
**caractérisé en ce que**
la tubulure de remplissage et/ou de vidange (2) a une partie de prélèvement (17) disposée en aval de la partie d'étanchéité (15) dans la direction axiale, la partie de prélèvement ayant de préférence un diamètre intérieur agrandi par rapport à la partie d'étanchéité (15), la partie de prélèvement (17) étant, de préférence, réalisée de telle manière par rapport à la partie d'étanchéité (15) que l'insertion par pression d'une bague de fixation jetable (9) suivante transfère une bague de fixation jetable (9) qui est logée, notamment scellée, dans la partie d'étanchéité (15) dans la partie de prélèvement (17).

8. Dispositif de remplissage et/ou de vidange (1) selon la revendication 6 ou la revendication 7,
**caractérisé par**
un canal d'évacuation (3) qui est, de préférence, disposé en aval de la partie de prélèvement (17) dans la direction axiale et qui débouche dans la tubulure de remplissage et/ou de vidange (2) et qui est disposé de telle manière par rapport à la partie de prélèvement (17) qu'une bague de fixation jetable (9) qui est logée, notamment scellée, dans la partie de prélèvement (17) de la tubulure de remplissage et/ou de vidange (2) peut être enlevée, notamment manuellement, à travers le canal d'évacuation (3).

9. Dispositif de remplissage et/ou de vidange (1) selon l'une quelconque des revendications 6 à 8,
**caractérisé par**
un outil (4) pour le transfert de la bague de fixation jetable (9) de la zone d'extrémité dans la partie d'étanchéité (15), l'outil (4) étant déplaçable axialement d'une position de déverrouillage à une position d'étanchéité dans la direction axiale (A) dans ce but.

10. Dispositif de remplissage et/ou de vidange (1) selon la revendication 9,
**caractérisé en ce que**
l'outil (4) a une partie de contact (14) au moyen de laquelle la bague de fixation jetable (9) est maintenue axialement dans la partie d'étanchéité (15) et/ou pressée radialement contre la partie d'étanchéité (15) quand l'outil (4) est dans la position d'étanchéité.

11. Dispositif de remplissage et/ou de vidange (1) selon la revendication 9 ou la revendication 10,
**caractérisé en ce que**
l'outil (4) a une partie de repos (13) qui repose sur un bord (10) axial de la zone d'extrémité de la tubulure de remplissage et/ou de vidange (2) quand l'outil (4) est dans la position d'étanchéité.

12. Dispositif de remplissage et/ou de vidange (1) selon l'une quelconque des revendications 6 à 11,
**caractérisé en ce que**
la bague de fixation jetable (9) est réalisée en matériau polymère, notamment en polyamide ou en polyuréthane.

13. Dispositif de remplissage et/ou de vidange (1) selon l'une quelconque des revendications 6 à 12,
**caractérisé en ce que**
la bague de fixation jetable (9) a un profil de coupe transversale qui a au moins deux branches (18) qui sont reliées l'une à l'autre à un angle.

14. Dispositif de remplissage et/ou de vidange (1) selon l'une quelconque des revendications 6 à 13,
**caractérisé en ce que**
la bague de fixation jetable (9) a un profil de surface (20) sur une surface radialement extérieure, de préférence sur une branche (18) radialement extérieure.

15. Dispositif de remplissage et/ou de vidange (1) selon l'une quelconque des revendications 6 à 14,
**caractérisé en ce que**
le diamètre intérieur de la zone d'extrémité est 0,2 % à 1,5 % plus grand que le diamètre intérieur de la partie d'étanchéité (15).

16. Dispositif de remplissage et/ou de vidange (1) selon l'une quelconque des revendications 6 à 15,
**caractérisé en ce que**
le diamètre intérieur de la patrie de prélèvement (17) est 0,2 % à 1,5 % plus grand que le diamètre intérieur de la partie d'étanchéité (15).

17. Dispositif de remplissage et/ou de vidange (1) selon l'une quelconque des revendications 6 à 16,
**caractérisé en ce que**
la partie d'étanchéité (15) est réalisée par une moulure, de préférence introduite de l'extérieur dans la tubulure de remplissage et/ou de vidange (2).
